# EUROPÄISCHE PATENTSCHRIFT

(11) **EP 1 066 296 B1**
(45) Veröffentlichungstag und Bekanntmachung des Hinweises auf die Patenterteilung: **04.09.2002**
(21) Anmeldenummer: 99907619.3
(22) Anmeldetag: 11.03.1999
(51) Int. Cl.: C07F 7/08, C07F 5/02, C08F 4/58, C08F 10/00, C08F 210/16

(54) **NEUE DENDRIMERE VERBINDUNGEN, EIN VERFAHREN ZU DEREN HERSTELLUNG SOWIE DEREN VERWENDUNG ALS KATALYSATOREN**
NOVEL DENDRIMER COMPOUNDS, METHOD FOR THE PRODUCTION THEREOF, USE THEREOF AS CATALYSTS
NOUVEAUX COMPOSES DENDRIMERES, LEUR PROCEDE DE PRODUCTION ET LEUR UTILISATION COMME CATALYSEURS

(30) Priorität: 24.03.1998 DE 19812881
(43) Veröffentlichungstag der Anmeldung: 10.01.2001
(73) Patentinhaber: Bayer Aktiengesellschaft, 51368 Leverkusen (DE)
(72) Erfinder: BECKE, Sigurd, D-51503 Rösrath (DE); DENNINGER, Uwe, D-51469 Bergisch Gladbach (DE); MAGER, Michael, D-51375 Leverkusen (DE); WINDISCH, Heike, D-51429 Bergisch Gladbach (DE)
(86) Internationale Anmeldenummer: EP9901558
(87) Internationale Veröffentlichungsnummer: WO99048898

(56) Entgegenhaltungen:
- EP-A2- 0 743 313
- WO-A1-97/01565
- WO-A1-97/32908
- DE-A1- 19 516 200

## Beschreibung

Die vorliegende Erfindung betrifft neue dendrimere Verbindungen, ein Verfahren zu deren Herstellung sowie deren Verwendung als Katalysatoren zur Herstellung von Polymeren, insbesondere deren Verwendung als Cokatalysatoren für Metallocene zur Polymerisation von ungesättigten Verbindungen.

Die Verwendung von Metallocenen im Gemisch mit aktivierenden Cokatalysatoren, bevorzugt Alumoxanen (MAO), zur Polymerisation von Olefinen und Diolefinen ist seit langem bekannt (s. z.B. EP-A 129 368, 347 128, 347 129, 351 392, 485 821, 485 823).

Die Katalysatorsysteme auf Basis von Metallocenen und Alumoxanen haben jedoch z.T. beträchtliche Nachteile. So lassen sich Alumoxane, insbesondere MAO, weder in situ noch in einem Präfomierungsverfahren mit hoher Reproduzierbarkeit herstellen. MAO ist ein Gemisch verschiedener Aluminiumalkyl-haltiger Spezies, die miteinander im Gleichgewicht vorliegen, was auf Kosten der Reproduzierbarkeit bei der Polymerisation von olefinischen Verbindungen geht. Außerdem ist MAO nicht lagerstabil und verändert seine Zusammensetzung bei thermischer Beanspruchung. Ein weiterer schwerwiegender Nachteil ist der hohe Überschuß an MAO, der bei der Aktivierung von Metallocenen erforderlich ist. Das große MAO/Metallocen-Verhältnis ist aber eine zwingende Voraussetzung, um hohe Katalysatoraktivitäten zu erhalten. Hieraus resultiert jedoch ein entscheidender Verfahrensnachteil, da bei der Aufarbeitung die Aluminiumverbindungen von den Polymeren abgetrennt werden müssen. MAO ist außerdem ein kostenbestimmender Faktor bei der Verwendung von MAO-haltigen Katalysatorsystemen, was bedeutet, daß MAO-Überschüsse unwirtschaftlich sind.

In J. Am. Chem. Soc. 1991, 113, 3623 wird das Tris(pentafluorphenyl)boran als Cokatalysator für Metallocendialkyle beschrieben. Die Polymerisationsaktivität von Katalysatoren auf Basis von Tris(Pentafluorphenyl)boran ist jedoch ungenügend. In EP-A 277 003 und 277004 werden ionische Katalysatorsysteme beschrieben, die durch Reaktion von Metallocenen mit ionisierenden Reagenzien hergestellt werden. Als ionisierende Reagenzien werden bevorzugt perfluorierte tetraaromatische Borat-Verbindungen, insbesondere Tetrakis(pentafluorphenyl)borat-Verbindungen, eingesetzt (EP 468 537, EP 561 479). Die Herstellung und Einführung von Pentafluorphenyl-Substituenten ist jedoch aufwendig und teuer. Die Verwendung von Tetrakis-(pentafluorphenyl)borat-Verbindungen in technischem Maßstab ist daher sehr kostenintensiv. Ein weiterer Nachteil von Tetrakis(pentafluorphenyl)borat-Verbindungen ist deren schlechte Löslichkeit in Kohlenwasserstoffen.

In WO 93/11172 werden polyanionische Aktivatoren für Metallocene beschrieben, die z.B. aus einer Polystyrolmatrix bestehen, an die sogenannte nicht koordinierende Anionen, bevorzugt Borat-Verbindungen mit Pentafluorphenyl-Substituenten, chemisch angebunden sind. Die Katalysatoraktivität der oben beschriebenen Borat-Verbindungen fällt jedoch stark ab, wenn die fluoraromatischen Substituenten am Bor durch andere Substituenten ersetzt werden, beispielsweise durch Methyl- oder Butyl-Substituenten.

Im Vergleich zu den in EP 468 537 beschriebenen Aktivatoren, z.B. N,N-Dimethylaniliniumtetrakis(pentafluorphenyl)borat, weisen die in WO 93/11172 beschriebenen polyanionischen Aktivatoren eine geringere Polymerisationsaktivität auf. Ein weiterer Nachteil ist die schlechte Ausbeute bei der Herstellung der polyanionischen Aktivatoren. Als Ausgangsverbindung wird das teure Tris(pentafluorphenyl)boran eingesetzt, welches in einem aufwendigen Verfahren auf einer Matrix, z.B. vernetztes Polystyrol chemisch angebunden werden muß. Die polyanionischen Aktivatoren besitzen keine einheitliche Oberfläche, wobei die Zugänglichkeit der Moleküloberfläche bzw. der aktiven Endgruppen eingeschränkt sein kann. Die genaue Zusammensetzung, insbesondere die Anzahl der aktiven Endgruppen der polyanionischen Aktivatoren ist nicht bekannt. Die polyanionischen Aktivatoren besitzen keine definierte Molekülgröße und Formstabilität. Technisch von Nachteil ist die schlechte Dosierbarkeit der polyanionischen Aktivatoren. Die schwerlöslichen polyanionischen Aktivatoren werden in der Polymerisationskatalyse als Feststoffe eingesetzt. Dies führt in einem kontinuierlichen Polymerisationsprozeß zu technischen Nachteilen.

WO 97/32908 offenbart organosilicon haltige Dendrimere mit Zentralatomen der vierten Nebengruppe des PSE. Zur Verwendung können diese Dendrimere in der Olefinpolymerisation herangezogen werden.

Es bestand daher die Aufgabe, neue Cokatalysatoren zu finden, die die oben genannten Nachteile vermeiden. Insbesondere bestand die Aufgabe darin, ein kostengünstiges Katalysatorsystem zu kreieren, das einfach herzustellen, technisch leicht zu handhaben und das in der Lage ist, ungesättigte Verbindungen, wie z.B. Olefine und Diene, mit hoher Katalysatoraktivität zu polymerisieren.

Es wurde nun überraschend gefunden, daß metallhaltige dendrimere Verbindungen, bevorzugt in Kombination mit Metallocenen, sich besonders gut für die oben beschriebenen Aufgaben eignen.

Gegenstand der vorliegenden Erfindung sind daher neue dendrimere Verbindungen der allgemeinen Formel

R¹ ₄₋ᵢMe¹[(R⁴)ₙX]ᵢ (I),

worin
- X: für Me²R²R³(R^{y})ᵣ steht,
- R¹, R², R³, R^{y}: gleich oder verschieden sind, gegebenenfalls ein- oder mehrfach substituiert sein können, und für Wasserstoff, C₅-C₂₀-Cycloalkyl, C₁-C₂₀-Alkyl, C₇-C₄₀-Aralkyl, C₆-C₄₀-Aryl, C₁-C₁₀-Alkoxy, C₆-C₄₀-Aryloxy, Silyloxy oder Halogen stehen,
- R⁴: ein gegebenenfalls ein- oder mehrfach substituierter Alkylen-, Alkenylen-oder Alkinylenrest, der gegebenenfalls durch ein oder mehrere Heteroatome unterbrochen ist, darstellt,
- Me¹: für ein Element der Gruppe IVa des Periodensystems der Elemente (nach IUPAC) steht,
- Me²: ein Element der Gruppe IIIa des Periodensystems der Elemente (nach IUPAC) darstellt,
- i: eine ganze Zahl von 2 bis 4 bedeutet,
- n: für eine ganze Zahl von 1 bis 20 steht und
- r: 0 oder 1 sein kann,
wobei für r = 1 der Rest Me² eine negative Formalladung trägt und im Fall einer negativen Formalladung von Me² diese durch ein Kation kompensiert wird,
oder worin
- X: für Me¹R⁵ₐ[(R⁴)ₘMe²R²R³(R^{y})ᵣ]₃₋ₐ steht,
- Me¹, Me², R¹, R², R³, R⁴, R^{y}, i, n, r: die zuvor erwähnten Bedeutungen besitzen,
- R⁵: die Bedeutung der Reste R¹, R², R³, R^{y} hat,
- m: gleich oder verschieden von n ist und für ganze Zahlen von 1 bis 20 steht und
- a: 0, 1 oder 2 bedeutet,
oder worin
- X: für Me¹R⁵ₐ[(R⁴)ₘMe¹R⁶_{b}[(R⁴)ₚMe²R²R³(R^{y})ᵣ]_{3-b}]₃₋ₐ steht,
- Me¹, Me², R², R³, R⁴, R⁵, R^{y}, i, n, r, m, a: die zuvor erwähnten Bedeutungen besitzen,
- R⁶: die Bedeutung der Reste R¹, R², R³, R^{y}, R⁵ hat,
- b: für 0, 1 oder 2 steht und
- p: ganze Zahlen von 1 bis 20 darstellt,
wobei die in DE 195 16 200 beschriebenen Verbindungen, hergestellt durch Umsetzung von Siliciumtetrachlorid in einer Grignardreaktion zu Tetraallylsilan, das anschließend mehrere Male abwechselnd
a) in einer quantitativen Reaktion in Gegenwart eines Katalysators mit Trichlorsilan und nachfolgend
b) in einer Grignardreaktion mit einer Allylverbindung unter Verwendung jeweils geeigneter Lösungsmittel umgesetzt wird, bis ein dendrimeres Grundgerüst mit nach außen weisenden Allylgruppen erreicht ist, dessen äußere Allylgruppen
c) in einer Hydroborierungsreaktion mit 9-Borabicyclo[3.3.1]nonan derivatisiert werden,
ausgenommen sind.

Hierunter fallen :
a) dendrimere Verbindungen mit flüssigkristallinen Eigenschaften, dadurch gekennzeichnet, dass das Grundgerüst aus einem flexiblen Carbosilangerüst besteht
   und
b) dendrimeren Verbindungen der allgemeinen Struktur II 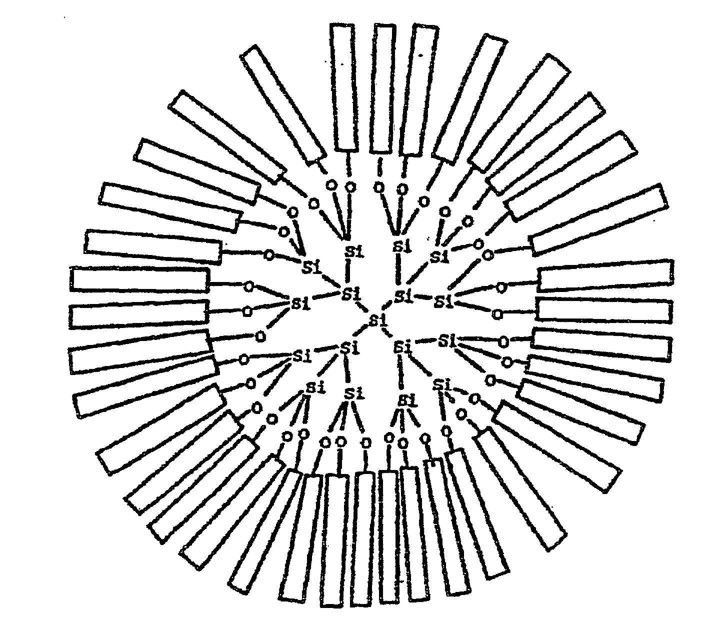
worin ein Rechteck eine Stäbchenförmige, mesogene gruppe symbolisiert.

Als Kationen im Fall einer negativen Formalladung von Me² kommen Ionen von Atomen oder Molekülen in Betracht wie Alkalimetallionen, z.B. Li⁺, Na⁺ oder K⁺, Erdalkalimetallionen, wie Be²⁺, Mg²⁺, Ca²⁺, Ba²⁺, Übergangsmetallionen, wie Zn²⁺, Cd²⁺, Mg²⁺, Cu⁺, Cu²⁺, oder organische Verbindungen, wie Ammoniumoder Phosphoniumionen vom Typ NR₄⁺ oder PR₄⁺, bevorzugt Ph-N(CH₃)₂H⁺, oder Carbokationen vom Typ CR₃⁺, bevorzugt CPh₃⁺.

Die Art des Kations NR₄⁺ beeinflusst insbesondere auch die Löslichkeit der Salze, bestehend aus den erfindungsgemäßen dendrimeren Verbindungen der Formel (I), die mindestens eine negative Formalladung aufweisen (r = 1) und Kationen, die die Formalladung ausgleichen. Die Löslichkeit der genannten Salze in unpolaren Lösungsmitteln, wie z.B. Toluol und Xylol, kann z.B. dadurch verbessert werden, daß Ammoniumsalze NR'R₃⁺ eingesetzt werden, die einen längerkettigen, verzweigten oder unverzweigten Kohlenwasserstoffrest R' enthalten. Bevorzugt ist R' dabei ein unverzweigter C₆-C₄₀-Alkylrest, besonders bevorzugt ein C₈-C₁₂-Alkylrest. Die verbleibenden Reste R in NR₃R' können, unabhängig voneinander, Wasserstoff, sowie gegebenenfalls ein oder mehrfach substituierte C₁-C₅-Alkyl- und C₆-C₁₂-Arylreste sein. Bevorzugt ist in NR₃R' mindestens ein Rest R gleich Wasserstoff. Im Einzelnen seien z.B. Kationen wie Undecyldimethylammonium und Dodecyldimethylammonium, genannt.

Als Cycloalkylreste der Formel (I) kommen besonders solche mit 5 bis 10 Kohlcnstoffatomen in Frage. Genannt werden beispielsweise Cyclopentyl-, Cyclohexyl-, Cycloheptyl- oder Cyclooctylreste, kondensierte Cycloaliphatereste, wie Decalinoder -Hydrinden-Reste oder bicyclische Reste, wie Norbornyl-Reste.

Bevorzugt seien Cyclopentyl-, Cyclohexyl- und Norbornylreste genannt.

Als Alkylreste sind bevorzugt solche mit 1 bis 10 Kohlenstoffatomen, beispielsweise werden genannt: Methyl, Ethyl, Propyl, n-Butyl, Pentyl, Hexyl, Heptyl, Octyl, isoPropyl, sec.-Butyl, tert.-Butyl, neo-Pentyl, bevorzugt Methyl, Ethyl, Propyl, n-Butyl, sec.-Butyl, tert.-Butyl.

Als Aralkylreste werden solche mit 7 bis 20 Kohlenstoffatomen genannt, bevorzugt der Benzylrest.

Als Arylreste kommen bevorzugt solche mit 6 bis 20 Kohlenstoffatomen in Frage, beispielsweise werden genannt: Phenyl, Toluyl, p-Halogenphenyl, Mesityl, Pentafluorphenyl, Bis-(3,5-trifluormethyl)-phenyl, insbesondere Pentafluorphenyl, Bis-(3,5-trifluormethyl)-phenyl, ganz besonders bevorzugt Pentafluorphenyl.

Als Aryloxyreste kommen insbesondere solche mit 6 bis 10 Kohlenstoffatomen in Frage, genannt werden z.B. Phenyloxy-Reste.

Als Silyloxyreste kommen Verbindungen des Typs -O-SiR₃ in Betracht, worin R für C₁-C₁₀-Alkylreste oder C₆-C₁₀-Arylreste steht. Bevorzugt sind Silyloxyreste, wie -O-SiMe₃, -O-SiEt₃ und -O-SiPh₃.

Als Halogene werden beispielsweise eingesetzt Fluor, Chlor und Brom, insbesondere Fluor und Chlor.

Wie zuvor erwähnt können die Reste R¹, R², R³, R⁴, R^{y} der Formel (I) je nach Anzahl der C-Atome ein- oder mehrfach, bevorzugt ein- bis zehnfach, besonders bevorzugt ein- bis fünffach, substituiert sein. Als Substituenten kommen z.B. in Frage die zuvor erwähnten Cycloalkyl-, Alkyl-, Aralkyl-, Aryl-, Alkoxy-, Aryloxyund Silyloxyreste sowie die genannten Halogene. Bevorzugte Substituenten sind Halogene, insbesondere Fluor, Alkyle, wie Methyl und Ethyl, perhalogenierte Alkyle, wie CF₃, oder perhalogenierte Aromaten, wie C₆F₅.

Als Elemente der 4. Hauptgruppe des Periodensystems der Elemente sind zu nennen Si, Ge, Sn und Pb, bevorzugt Si, Ge, Sn, insbesondere Si.

Als Elemente der 3. Hauptgruppe des Periodensystems kommen in Frage B, Al, In und Ga, bevorzugt B, Al, ganz besonders bevorzugt B.

Bevorzugt steht i in der Formel (I) für die Zahlen 3 oder 4, besonders bevorzugt für 4, n ist eine ganze Zahl von 1 bis 10, insbesondere 2 bis 5, und r steht für 0.

Darüber hinaus steht in der Formel (I) m bevorzugt für ganze Zahlen von 1 bis 10, insbesondere 2 bis 5, a für 0, b für 0 und p für ganze Zahlen von 1 bis 10, insbesondere 2 bis 5.

Als dendrimere Verbindungen kommen bevorzugt solche der allgemeinen Formel (II) in Betracht

R¹ ₄₋ᵢSi[(R⁴)ₙX]ᵢ (II),

worin
- X: für Me²R²R³(R^{y})ᵣ steht und R¹, R², R³, R^{y} gleich oder verschieden, bevorzugt gleich sind, gegebenenfalls ein- oder mehrfach substituiert sein können, und für C₅-C₆-Cycloalkyl, C₆-C₁₀-Aryl, C₁-C₁₀-Alkyl und/oder Halogen stehen,
R⁴ ein Methylenrest ist,
Me² Bor oder Al darstellt,
i eine ganze Zahl von 2 bis 4 bedeutet,
n für eine ganze Zahl von 1 bis 20 steht.
r 0 oder 1 sein kann,
oder worin
- X: für SiR⁵ₐ[(R⁴)ₘMe²R²R³(R^{y})ᵣ]₃₋ₐ steht,
R⁵ die Bedeutung der Reste R¹, R², R³, R^{y} hat,
m gleich oder verschieden von n ist und für ganze Zahlen von 1 bis 20 steht,
a 0, 1 oder 2 bedeutet, und Me², R², R³, R⁴, i, n, r die zuvor erwähnten Bedeutungen besitzen,
oder worin
- X: für SiR⁵ₐ[(R⁴)ₘSiR⁶_{b}[(R⁴)ₚMe²R²R³(R^{y})ᵣ]_{3-b}]₃₋ₐ steht,
Me², R², R³, R⁴, R⁵, R^{y}, i, n, r, m, a die zuvor erwähnten Bedeutungen besitzen
und
R⁶ die Bedeutung der Reste R¹, R², R³, R⁵, R^{y} hat,
b für 0, 1 oder 2 steht und
p ganze Zahlen von 1 bis 20 darstellt.

Ganz besonders bevorzugt sind dendrimere Verbindungen der allgemeinen Formel (III)

R¹ ₄₋ᵢSi[(CH₂)ₙX]ᵢ (III),

worin
- X: für BR²R³(R^{y})ᵣ steht und
- R¹, R², R³, R^{y}: gleich oder verschieden sind, bevorzugt gleich sind, gegebenenfalls ein- oder mehrfach substituiert sein können, und für C₆-C₁₀-Aryl oder C₁-C₁₀-Alkyl stehen,
- i: 3 oder 4 ist,
- n: für 1 bis 20 steht und
- r: 0 oder 1 sein kann,
oder worin
- X: für SiR⁵ₐ[(CH₂)ₘBR²R³(R^{y})ᵣ]₃₋ₐ steht,
- R⁵: die Bedeutung der Reste R¹, R², R³, R^{y} hat,
- m: gleich oder verschieden von n ist und für ganze Zahlen von 1 bis 20 steht,
- a: 0, 1 oder 2 ist und
- R², R³, R⁵, R^{y}, i, n, r: die zuvor erwähnten Bedeutungen besitzen,
oder worin
- X: für SiR⁵ₐ[(CH₂)ₘSiR⁶_{b}[(CH₂)ₚBR²R³(R^{y})ᵣ]_{3-b}]₃₋ₐ steht,
- R², R³, R⁵, R^{y}, i, n, m, r, a: die zuvor erwähnten Bedeutungen haben,
- R⁶: die Bedeutung der Reste R¹, R², R³, R^{y} hat,
- b: für 0, 1 oder 2 steht und
- p: ganze Zahlen von 1 bis 20 darstellt

Hervorzuheben sind formelmäßig folgende dendrimere Verbindungen:

Si[(CH₂)₃BCl₂]₄

Si[(CH₂)₃BMe₂]₄

Si[(CH₂)₃B(C₆F₅)₂]₄

Si[(CH₂)₃BMes₂]₄

Si[(CH₂)₃B(C₆H₃(CF₃)₂)₂]₄

Si[(CH₂)₃BMe₃]₄⁴⁻4K⁺

Si[(CH₂)₃B(n-Bu)₃]₄⁴⁻4K⁺

Si[(CH₂)₃B(n-Bu)₂]₄

Si[(CH₂)₃B(C₆F₅)₃]₄⁴⁻4K⁺

Si[(CH₂)₃B(C₆H₃(CF₃)₂)₃]₄⁴⁻4K⁺

Si{(CH₂)₂Si[(CH₂)₃BCl₂]₃}₄

Si {(CH₂)₂Si[(CH₂)₃BMe₂]₃}₄

Si {(CH₂)₂Si[(CH₂)₃B(n-Bu)₂]₃}₄

Si {(CH₂)₂Si[(CH₂)₃B(C₆F₅)₂]₃}₄

Si{(CH₂)₂Si[(CH₂)₃BMe₃]₃}₄¹²⁻ 12K⁺

Si{(CH₂)₂Si[(CH₂)₃B(n-Bu)₃]₃}₄¹²⁻ 12K⁺

Si{(CH₂)₂Si[(CH₂)₃B(C₆F₅)₃]₃}₄¹²⁻ 12K⁺

Si {(CH₂)₂Si[(CH₂)₃B(3,5-(CF₃)₂C₆H₃)₃]₃}₄¹²⁻ 12K⁺

Si{O-CH₂)₃Si(CH₃)[(CH₂)₃BCl₂]₂}₄

Si{O-CH₂)₃Si(CH₃)[(CH₂)₃BMe₂]₂}₄

Si{O-CH₂)₃Si(CH₃)[(CH₂)₃B(n-Bu)₂]₂}₄

Si{O-CH₂)₃Si(CH₃)[(CH₂)₃B(C₆H₅)₂]₂}₄

Si{O-CH₂)₃Si(CH₃)[(CH₂)₃B(C₆F₅)₂]₂}₄

Si{O-CH₂)₃Si(CH₃)[(CH₂)₃BMe₃]₄⁴⁻ 4K⁺

Si{O-CH₂)₃Si(CH₃)[(CH₂)₃B(C₆H₅)₃]₄⁴⁻ 4K⁺

Si{O-CH₂)₃Si(CH₃)[(CH₂)₃B(C₆F₅)₃]₄⁴⁻ 4K⁺

wobei Mes = 2,4,6-Mesityl und K = ein- oder mehrfach geladenes Kation bedeutet.
- K: steht bevorzugt für Alkalimetallionen, wie z.B. Li⁺, Na⁺, K⁺ oder Carbeniumionen, wie z.B. das Triphenylmethylkation, oder zwei- oder dreifach substituierte Ammoniumionen, wie z.B. N,N-Dimethylanilinium-, Trimethylammonium-, Triethylammonium-, Tri(n-Butyl)ammonium-, Dimethylundecylammonium-, Dimethyldodecylammonium-, Dimethyloctadecylammonium-, Methyldioctadecylammonium-, Methyloctadecylammonium- oder Dioctadecylammoniumionen.

Ein weiterer Gegenstand der vorliegenden Erfindung ist ein Verfahren zur Herstellung von dendrimeren Verbindungen der allgemeinen Formel (I), das dadurch gekennzeichnet ist, daß man Verbindungen der allgemeinen Formel (IV)

R¹ ₄₋ᵢMe¹[(R⁷)ₙ₋₂Y]ᵢ (IV),

worin
- Y: für CR⁸ = CR⁹R¹⁰ steht,
- R⁸, R⁹ und R¹⁰: gleich oder verschieden sind und für Wasserstoff, Alkyl, Aryl oder Halogen stehen,
- R⁷: die Bedeutung des Restes R⁴ in der Formel (I) hat und
- n: für eine ganze Zahl von 2 bis 20 steht,
- R¹, Me¹ und i: die für die Formel (I) gegebene Definition besitzen,
oder worin
- Y: für Me¹R⁵ₐ[(R⁷)ₘ₋₂(CR⁸=CR⁹R¹⁰)]₃₋ₐ steht,
- R⁵: die in Formel (I) gegebene Definition besitzt,
oder worin
- Y: für Me¹R⁵ₐ[(R⁴)ₘMe¹R⁶_{b}[(R⁷)ₚ₋₂(CR⁸=CR⁹R¹⁰)]_{3-b}]₃₋ₐ steht,
- R⁶: die in Formel (I) gegebene Definition besitzt,
- m, p: für eine ganze Zahl von 2 bis 20 steht und worin alle anderen genannten Reste in den Formeln für Y die vorgenannten Bedeutungen besitzen,
mit Verbindungen der allgemeinen Formel (V)

R¹¹Me²R²R³ (V),

worin
- R¹¹: für Wasserstoff oder C₁-C₃₀-Alkyl steht und
- Me²,R² und R³: die in der Formel (I) genannten Bedeutungen besitzen,
zur Reaktion bringt und im Falle von r = 1 das daraus erhaltene Produkt weiter mit Verbindungen der allgemeinen Formel (VI)

Me³-R^{y} (VI),

worin
- Me³: ein Alkalimetall ist und R^{y} die in der Formel (I) genannte Bedeutung besitzt,
oder mit Verbindungen der allgemeinen Formel (VII)

Hal_{q}-Me⁴-R^{y} _{2-q} (VII),

worin
- Me⁴: ein Erdalkali- oder Übergangsmetall der 1. oder 2. Nebengruppe ist,
- Hal: für Halogen steht,
- q: 0 oder 1 ist und
- R^{y}: die Bedeutung wie zuvor hat,
umsetzt.

Als Erdalkalimetall sei bevorzugt Mg, als Übergangsmetalle werden bevorzugt Zn, Cd, Hg oder Cu genannt. Als Alkalimetalle werden bevorzugt Li, Na und K, besonders bevorzugt Li genannt.

Als Reste R⁸, R⁹ und R¹⁰ sind Wasserstoff und C₁-C₅-Alkyl bevorzugt, Wasserstoff ist besonders bevorzugt.

Durch den Einfluß des Metallatoms Me¹ in den ungesättigten Verbindungen der Formel (IV) mit n, m oder p = 2, kommt es bei der Addition von Verbindungen der Formel (V) oft zur Bildung von verzweigten Verbindungen mit folgendem Strukturelement 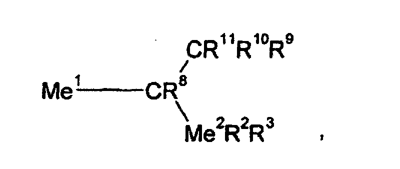 wodurch Verbindungen der Formel (I) mit n, m oder p = 1 erhalten werden können.

Als Verbindungen der Formeln (IV), (V), (VI) und (VII) werden bevorzugt solche der nachfolgend aufgeführten allgemeinen Formeln (IVa), (Va), (VIa) bzw. (VIIa) eingesetzt:

R¹ ₄₋ᵢSi[(CH₂)ₙY]ᵢ (IVa),

worin
- Y: -CH = CH₂ bedeutet,
- i: für 3 oder 4 steht,
- R¹: ein gegebenenfalls ein- oder mehrfach substituierter C₁-C₆-Alkyl- oder C₆-C₁₂-Arylrest ist und
- n: für eine ganze Zahl von 1 bis 10 steht,
oder worin
- Y: SiR⁵ₐ[(CH₂)ₘCH=CH₂]₃₋ₐ bedeutet,
- a: 0,1 oder 2 ist und
- R⁵: die Bedeutung von R¹ hat,
- m: für eine ganze Zahl von 1 bis 10 steht,
oder worin
- Y: SiR⁵ₐ[(CH₂)ₘSiR⁶_{b}[(CH₂)ₚCH=CH₂]_{3-b}]₃₋ₐ bedeutet,
- R⁶: die Bedeutung von R¹ hat und
- p und m: für eine ganze Zahl von 1 bis 10 stehen;

H-BR²R³ (Va),

worin
- R², R³: die in Formel (I) genannte Bedeutung besitzen;

Me³-R^{y} (VIa),

worin
- Me³: Li oder Na ist und
- R^{y}: die in Formel (I) genannte Bedeutung hat:

Hal_{q}-Mg-R^{y} _{2-q} (VIIa),

worin
- Hal: Cl oder Br ist und
- R^{y}: die Bedeutung wie in Formel (I) hat und
- q: 0 oder 1 ist.

Als besonders bevorzugte Verbindungen der Formel (IV) werden solche der allgemeinen Formel (IVb) eingesetzt:

Si[(CH₂)ₙY]₄ (IVb),

worin
- Y: -CH=CH₂ bedeutet und
- n: 1,2, 3 oder 4 ist,
oder worin
- Y: Si[(CH₂)ₘCH=CH₂]₃ bedeutet und
- m: 1,2,3 oder 4 ist,
oder worin
- Y: Si[(CH₂)ₘSi[(CH₂)ₚCH=CH₂]₃]₃,
- p: 1, 2, 3 oder 4 ist und
- m: die obige Bedeutung hat.

Nach dem erfindungsgemäßen Verfahren werden - wie erwähnt - Verbindungen der allgemeinen Formel (IV) mit Verbindungen der allgemeinen Formel (V) umgesetzt und so nicht ionische dendrimere Verbindungen der allgemeinen Formel (I) für r = 0 erhalten.

Die Umsetzung der Verbindungen der allgemeinen Formel (IV) mit Verbindungen der allgemeinen Formel (V) erfolgt erfindungsgemäß bei Temperaturen von -100 bis 150°C, bevorzugt -80 bis 100°C, und bei Drücken von Normaldruck bis 10 bar, bevorzugt Normaldruck. Im allgemeinen ist bei der Umsetzung das molare Verhältnis von Verbindungen der allgemeinen Formel (IV) zu Verbindungen der allgemeinen Formel (V) so, daß für jeden Rest CR⁸=CR⁹C¹⁰ der Formel (IV) mindestens ein Äquivalent der Verbindung nach Formel (V) zur Verfügung steht.

Die Umsetzung wird gegebenenfalls in Gegenwart von Lösungs- und/oder Verdünnungsmittel durchgeführt, wie z.B. Alkanen. In vielen Fällen kann allerdings auch auf die Verwendung von Lösungs- und/oder Verdünnungsmittel verzichtet werden. Dies ist z.B. der Fall, wenn eine ungesättigte Verbindung der Formel (IV) mit HBCl₂ zur Reaktion gebracht wird. Das benötigte HBCl₂ kann dabei z.B. intermediär aus Trialkylsilanen, R₃Si-H, und BCl₃ hergestellt werden. Dieser Herstellungsprozeß ist z.B. in J. Org. Chem. 1990, 55, 2274, beschrieben.

Zur Herstellung von ionisch aufgebauten dendrimeren Verbindungen der allgemeinen Formel (I) (im Falle von r = 1) wird das aus Verbindungen der allgemeinen Formel (IV) und Verbindungen der allgemeinen Formel (V) erhaltene Umsetzungsprodukt weiter mit organischen Alkali-, Erdalkali- oder Übergangsmetall-Verbindungen der Formel (VI) oder (VII) umgesetzt.

Die Umsetzung erfolgt dabei bei Temperaturen von -100 bis +200°C und Normaldruck, bevorzugt bei -100 bis 150°C. Als Lösungs- und/oder Verdünnungsmittel kommen die zuvor genannten Lösungs- und/oder Verdünnungsmittel in den ebenfalls zuvor genannten Mengen in Frage.

Die Verbindungen der Formeln (VI) oder (VII) werden bevorzugt in einem äquimolaren Verhältnis oder einem Überschuß bezüglich des Restes Me²R²R³ der aus der Umsetzung von Verbindungen der Formel (IV) mit Verbindungen der Formel (V) erhaltenen dendrimeren Verbindungen der Formel (I) mit r = 0 eingesetzt.

Die Herstellung der Ausgangsverbindungen der Formel (IV) ist bekannt und kann in analoger Weise wie bei der Herstellung von Carbosilan-Dendrimeren erfolgen. Herstellvorschrißen für Carbosilan-Dendrimere finden sich z.B. in Rubber Chem. Technol. 1992, 65, 303-314, Adv. Mater. 1993, 5, 466-468, Macromolecules 1993, 26, 963-968, J. Chem. Soc., Chem. Commun. 1994, 2575-2576, Organometallics 1994, 13, 2682-2690, Macromolecules 1995, 28, 6657-6661 sowie Organometallics 1995, 14, 5362-5366.

Dabei wird ein Alkenylsilan, wie z.B. Tetravinyl- oder Tetraallylsilan, mit einem Hydrochlorsilan, wie HSiCl₃, MSiMeCl₂ oder MSiMe₂Cl, zur Reaktion gebracht und das erhaltene Produkt weiter mit einer Alkenylmagnesiumverbindung umgesetzt (Grignard-Reaktion). Diese Reaktionssequenz (Hydrosilylierung mit Grignard-Reaktion) kann dann mehrfach wiederholt werden.

Als bevorzugte Ausgangsverbindungen der Formel (IV) kommen in Frage:

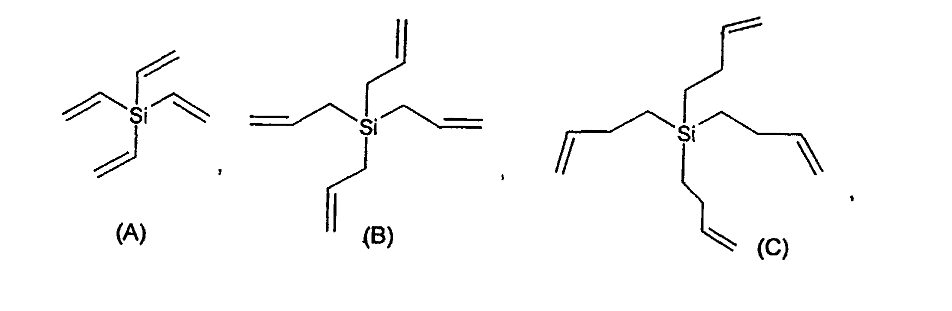

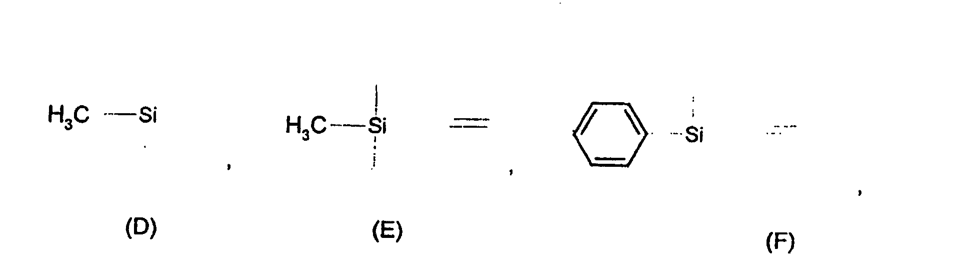

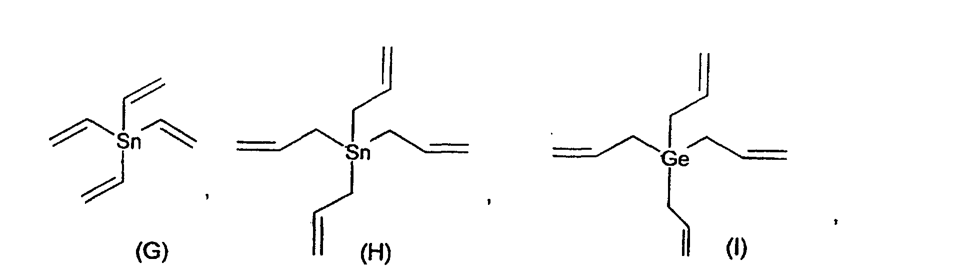

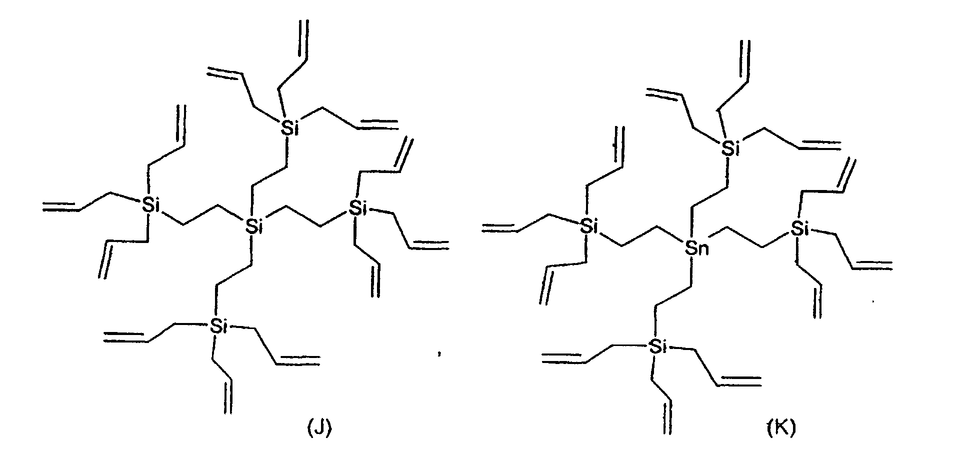

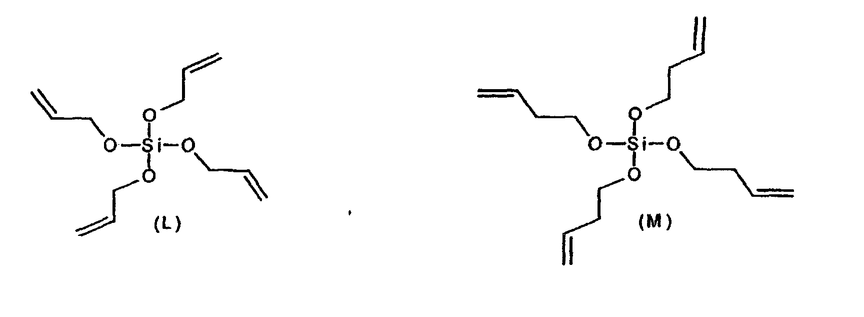

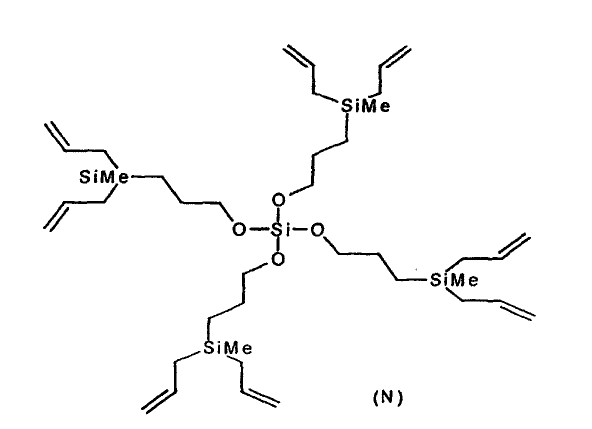

Die Herstellung der erfindungsgemäßen Verbindungen der Formel (I) sei durch das nachfolgende Formelschema verdeutlicht:

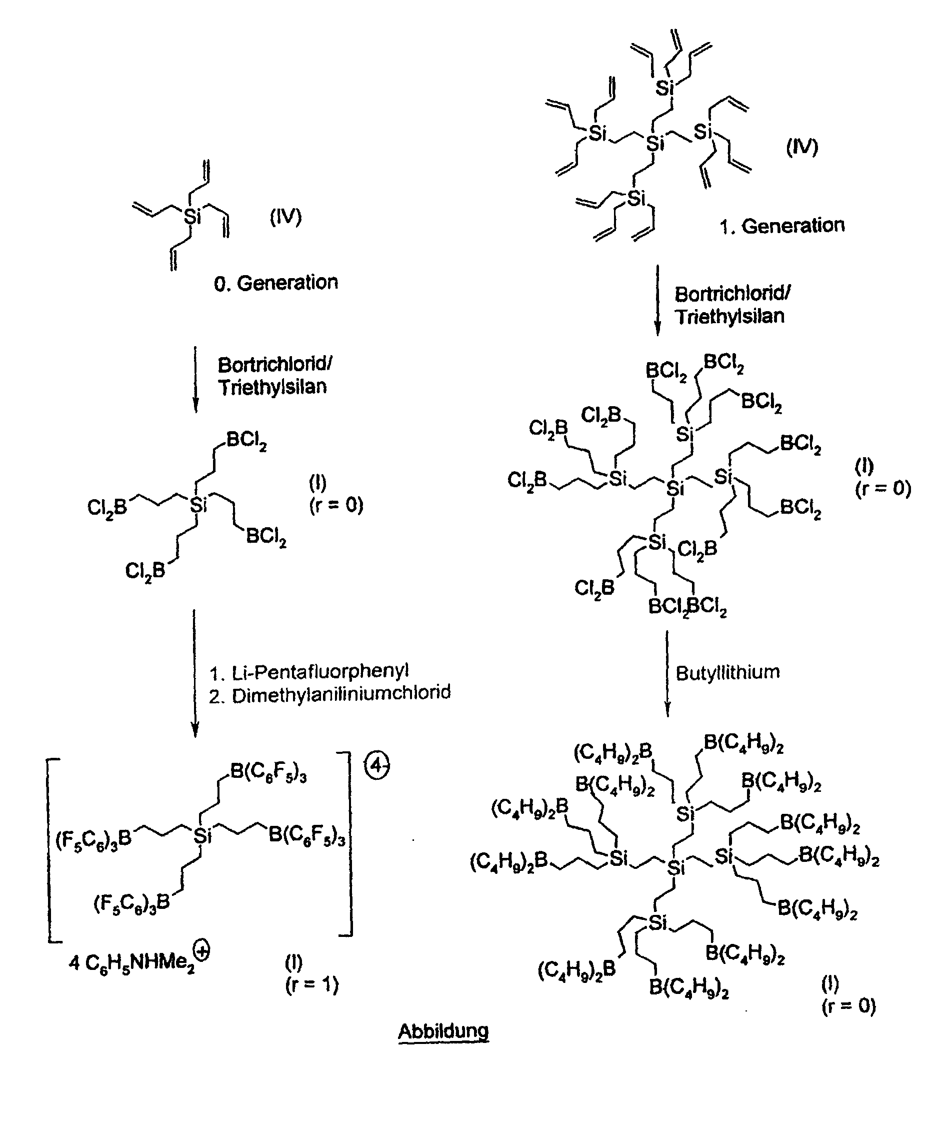

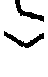

Die neuen dendrimeren Verbindungen der Formel (I) können verwendet werden als Katalysatoren oder zur Herstellung von Katalysatorsystemen auf Basis von Übergangsmetallkomplexen. Die genannte Verwendung der erfindungsgemäßen Verbindungen der Formel (I) ist dabei nicht durch die in Formel (I) aufgenommene Anschlußbedingung eingeschränkt.

Katalysatorsysteme auf Basis von Übergangsmetallkomplexen und der genannten dendrimeren Verbindungen der nicht eingeschränkten Formel (I) bestehen z.B. aus
a) einem Übergangsmetallkomplex der Formel (VIII)

   A_{c}Me⁵R¹² _{d} (VIII),

   worin
   - Me⁵: ein Übergangsmetall der Gruppen IIIb bis VIIb oder der Gruppe VIII des Periodensystems der Elemente nach IUPAC bedeutet,
   - A: ein gegebenenfalls ein- oder mehrfach verbrückter anionischer Ligand ist,
   - R¹²: die gleiche Bedeutung wie R¹ hat,
   sowie
   - c, d: für eine ganze Zahl von 0 bis 6 stehen und
b) einer dendrimeren Verbindung der Formel (I),
wobei das molare Verhältnis von Komponente a) zu Komponente b) üblicherweise im Bereich von 1:0,01 bis 1:100, bevorzugt von 1:0,1 bis 1:1 liegt.

Als Übergangsmetallkomplexe der Formel (VIII) kommen insbesondere solche in Frage, in denen
- Me⁵: ein Metall aus der Gruppe Titan, Zirkonium, Hafnium, Vanadium, Niob und Tantal ist,
- A: ein Pyrazolat der Formel N₂C₃R¹³₃
ein Pyrazolylborat der Formel R¹⁴B(N₂C₃R¹³₃)₃,
ein Alkoholat oder Phenolat der Formel OR¹⁴,
ein Siloxan der Formel OSiR¹⁴₃,
ein Thiolat der Formel SR¹⁴,
ein Acetylacetonat der Formel (R¹⁴CO)₂CR¹⁴,
ein Diimin der Formel (R¹⁵N=CR¹⁴)₂,
ein Amidinat der Formel R¹⁴C(NR¹⁵₂)_{2,}
ein Cyclooctatetraenyl, ein gegebenenfalls ein- oder mehrfach substituiertes Cyclopentadienyl, ein gegebenenfalls ein- oder mehrfach substituiertes Indenyl sowie ein gegebenenfalls ein- oder mehrfach substituiertes Fluorenyl ist,
wobei als Substituenten eine C₁- bis C₂₀-Alkylgruppe, eine C₁-C₁₀-Alkoxygruppe, eine C₆- bis C₂₀-Arylgruppe eine C₆- bis C₁₀-Aryloxygruppe, eine C₇- bis C₄₀-Arylalkylgruppe, eine C₇-C₄₀-Alkylarylgruppe, eine gegebenenfalls durch C₁- bis C₁₀ Kohlenwasserstoffreste substituierte Boranyl-, Silyl-, Amino- oder Phosphinylgruppe in Frage kommen,
- R¹²: für Wasserstoff, Fluor, Chlor, Brom, Methyl, Benzyl, Neopentyl und Phenyl steht,
- R¹³: in den Formeln für A für Wasserstoff oder eine C₁-C₁₀-Alkylgruppe steht.
- R¹⁴, R¹⁵: in den Formeln für A die gleiche Bedeutung wie R¹ besitzen,
- c: 1 oder 2 ist und
- d: 2 oder 3 bedeutet.

Bevorzugt sind Übergangsmetallkomplexe der Formel (VIII), wobei
- Me⁵: für Titan, Zirkonium und Hafnium steht,
- A: für Bis(trimethylsilyl)amid, Dimethylamid, Diethylamid, Diisopropylamid, 2,6-Di-tert.-butyl-4-methylphenolat, Cyclooctatetraenyl, Cyclopentadienyl, Methylcyclopentadienyl, Benzylcyclopentadienyl, n-Propylcyclopentadienyl, n-Butylcyclopentadienyl, iso-Butylcyclopentadienyl, t-Butylcyclopentadienyl, Cyclopentylcyclopentadienyl, Octadecylcyclopentadienyl, 1,2-Dimethylcyclopentadienyl, 1,3-Dimethylcyclopentadienyl, 1,3-Di-isopropylcyclopentadienyl, 1,3-Di-t-butylcyclopentadienyl, 1-Ethyl-2-methylcyclopentadienyl, 1-Isopropyl-3-methylcyclopentadienyl, 1-(n-Butyl)-3-methylcyclopentadienyl, 1-(t-Butyl)-3-methylcyclopentadienyl, Pentamethylcyclopentadienyl, 1,2,3,4-Tetramethyl-cyclopentadienyl, 1,2,4-Trimethylcyclopentadienyl, 1,2,4-Triisopropylcyclopentadienyl, 1,2,4-Tri(t-butyl)-cyclopentadienyl, Indenyl, Tetrahydroindenyl, 2-Methylindenyl, 4,7-Dimethylindenyl, 2-Methyl-4,5-benzoindenyl, 2-Methyl-4-phenylindenyl, Fluorenyl oder 9-Methyl-fluorenyl steht,
- R¹²: Chlor, Methyl oder Benzyl bedeutet,
- c: 1 oder 2 ist und
- d: 2 oder 3 bedeutet,
und die anionischen Liganden A durch bivalente Gruppen, wie Me₂Si, Ph₂Si, Ph(Me)Si, Me₂C, Ph₂C, Ph(Me)C oder CH₂CH₂ verbrückt sein können. Beispiele für die genannten Übergangsmetallverbindungen für c = 2 sind u.a. in EP 129 368, EP 351 392, EP 485 821, EP 485 823, EP 549 990, EP 659 758 beschrieben. Beispiele für die genannten Übergangsmetallverbindungen für c = 1 sind u.a. beschrieben in Macromol. Chem. Rapid Commun. (13) 1992, 265 und für verbrückte Monocyclopentadienylkomplexe in EP 416 815, WO 91/04257 oder WO 96/13529.

Als Übergangsmetallkomplexe der Formel (VIII) kommen auch solche in Frage, in denen
- Me⁵: für Nickel und Palladium steht,
- A: ein Diimin der Formel (R¹⁵N=CN¹⁴)₂ ist,
- c: für 1 und d für 2 steht,
und R¹², R¹⁴, R¹⁵ die zuvor genannte Bedeutung besitzen.

Beispiele für die genannten Diiminkomplexe sind u.a. in WO 96/23010 beschrieben.

Dem Katalysatorsystem aus Übergangsmetallkomplexen und den erfindungsgemäßen Dendrimeren können wahlweise auch noch Aluminium-organische Verbindungen zugesetzt werden. Beispiele für Aluminium-organische Verbindungen sind Trialkylaluminiumverbindungen, wie Trimethylaluminium, Triethylaluminium, Triisobutylaluminium, Triisooctylaluminium, darüber hinaus Dialkylaluminiumverbindungen, wie Diisobutylaluminiumhydrid, oder Aluminoxane, wie Trimethylaluminoxan oder Triisobutylaluminoxan. Das molare Verhältnis der Aluminium-organischen Verbindungen zu Übergangsmetallkomplexen der Formel (VIII) liegt im Bereich von 10.000:1 bis 0,1:1, bevorzugt von 1.000:1 bis 1:1, besonders bevorzugt von 100:1 bis 10:1.

Ein weiterer Gegenstand der vorliegenden Erfindung ist die Verwendung der neuen Katalysatoren oder der Katalysatorsysteme für die Polymerisation von ungesättigten organischen Verbindungen, insbesondere von Olefinen und Dienen. Als Polymerisation wird dabei sowohl die Homo- als auch die Copolymerisation der genannten ungesättigten Verbindungen verstanden. Insbesondere werden bei der Polymerisation eingesetzt C₂-C₁₀-Alkene, wie Ethylen, Propylen, Buten-1, Penten-1 und Hexen-1, Octen-1, Isobutylen, und Arylalkene, wie Styrol. Als Diene werden insbesondere eingesetzt: konjugierte Diene, wie 1,3-Butadien, Isopren, 1,3-Pentadien, und nicht konjugierte Diene, wie 1,4-Hexadien, 1,5-Heptadien, 5,7-Dimethyl-1,6-octadien, 4-Vinyl-1-cyclohexen, 5-Ethyliden-2-norbornen, 5-Vinyl-2-norbornen und Dicyclopentadien.

Die neuen dendrimeren Verbindungen der Formel (I) können aber - wie erwähnt auch alleine als Katalysatoren, z.B. für Polymerisationsreaktionen eingesetzt werden. Neben der Polymerisation von ungesättigten Verbindungen eignen sich die dendrimeren Verbindungen der Formel (I) auch zur Polymerisation von cyclischen Ethern, wie Ethylenoxid, Propylenoxid und Tetrahydrofuran.

Die erfindungsgemäßen Katalysatoren eignen sich insbesondere für die Herstellung von Kautschuken auf Basis von Copolymeren des Ethylens mit einem oder mehreren der genannten α-Olefine und der genannten Diene. Darüber hinaus eignet sich das erfindungsgemäße Katalysatorsystem für die Polymerisation von Cyclo-Olefinen, wie Norbornen, Cyclopenten, Cyclohexen oder Cyclooctan, und der Copolymerisation von Cycloolefinen mit Ethylen oder α-Olefinen.

Die Polymerisation kann in flüssiger Phase, in Gegenwart oder Abwesenheit eines inerten Lösungsmittels oder in der Gasphase durchgeführt werden. Als Lösungsmittel eignen sich aromatische Kohlenwasserstoffe, wie Benzol und/oder Toluol, oder aliphatische Kohlenwasserstorfe, wie Propan, Hexan, Heptan, Octan, Isobutan, Cyclohexan, oder Gemische der verschiedenen Kohlenwasserstoffe.

Es ist möglich, das erfindungsgemäße Katalysatorsystem auf einen Träger aufgebracht einzusetzen. Als geeignete Trägermaterialien sind z.B. zu nennen: anorganische oder organische polymere Träger, wie Silicagel, Magnesiumchlorid, Zeolithe, Ruß, Aktivkohle, Aluminiumoxid, Polystyrol sowie Polypropylen.

Die Polymerisation wird im allgemeinen bei Drücken von 1 bis 1000, bevorzugt 1 bis 100 bar, und Temperaturen von -100°C bis +250°C, bevorzugt 0°C bis +150°C, durchgeführt. Die Polymerisation kann in üblichen Reaktoren, kontinuierlich oder diskontinuierlich durchgeführt werden.

Die neuen dendrimeren Verbindungen der Formel (I) zeichnen sich durch eine hohe thermische Stabilität und Lagerstabilität aus. Die Herstellung erfolgt aus preisgünstigen Edukten, die technisch in großen Mengen verfügbar sind. Das oben beschriebene Herstellverfahren eröffnet einen breiten Zugang zu verschiedenartigen Strukturvarianten der dendrimeren Verbindung der Formel (I), welche eine definierte molekulare Struktur besitzen. Die optimale Struktur kann dem Verwendungszweck entsprechend angepaßt werden.

In Kombination mit Übergangsmetallkomplexen der Formel (VIII) besitzen die neuen dendrimeren Verbindungen eine hohe Katalysatoraktivität bei der Polymerisation von ungesättigten Verbindungen. Sie besitzen weiterhin verbesserte Katalysatorstandzeiten, d.h. gleichbleibend hohe Katalysatoraktivitäten bei langen Polymerisationszeiten. Aufgrund der hohen Katalysatoraktivität sind nur geringe Mengen an dendrimeren Verbindungen nötig. Der verbleibende Restkatalysatorgehalt im Polymeren ist so gering, daß sich eine Aufarbeitung zur Entfernung des Katalysators erübrigt. Somit ergibt sich ein Verfahrensvorteil, da ein teurer Waschschritt zum Entfernen des Katalysators entfällt.

Ein weiterer Vorteil ist das günstige molare Verhältnis von Übergangsmetallkomplexen der Formel (VIII) zu dendrimeren Verbindungen der Formel (I) bei der Herstellung von Katalysatorsystemen. Es werden hohe reproduzierbare Katalysatoraktivitäten erhalten, wenn die dendrimeren Verbindungen im molaren Unterschuß im Verhältnis zum Übergangsmetallkomplex eingesetzt werden.

Bei der Verwendung der dendrimeren Verbindungen der Formel (I) zur Herstellung von Katalysatorsystemen ist keine Voraktivierung nötig. Beispielsweise kann die Polymerisation von Olefinen wie folgt durchgeführt werden: ein Stahlautoklav wird nach den üblichen Reinigungsoperationen mit einem Lösungsmittel und einem Scavenger, z.B. Triisobutylaluminium befüllt. Durch den Scavenger werden mögliche Verunreinigungen und Katalysatorgifte, z.B. Wasser oder andere sauerstoffhaltigen Verbindungen unschädlich gemacht. Dann wird als Katalysatorvorstufe eine Verbindung der Formel (VIII) zugegeben. Anschließend wird der Reaktor mit Monomeren befüllt und die Polymerisation durch Zugabe einer Lösung der zuvor beschriebenen dendrimeren Verbindungen gestartet. Die separate Zuführung der dendrimeren Verbindung ohne Voraktivierung ist besonders in einem kontinuierlichen Polymerisationsprozeß von Vorteil.

Die Erfindung wird anhand der nachstehenden Beispiele näher erläutert.

### Allgemeine Angaben:

Die Herstellung und Handhabung organometallischer Verbindungen erfolgte unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert. Die Verbindungen wurden bevorzugt mittels ¹¹B-NMR, gegebenenfalls auch mit ¹H-NMR und ¹³C-NMR charakterisiert. Andere käufliche Edukte wurden ohne weitere Reinigung eingesetzt. Tetraallysilan wurde aus Siliciumtetrachlorid und Allylmagnesiumchlorid hergestellt.

### Beispiel 1:

### Herstellung von Si[(CH₂)₃BCl₂]₄

In einen Kolben mit Gaseinleitung, Rückflußkühler und Innenthermometer wurden bei -65°C 23,5 g (0,2 mol) Bortrichlorid einkondensiert. Bei dieser Temperatur wurde dann eine Mischung aus 23,3 g (0,2 mol) Triethylsilan und 9,6 g (0,05 mol) Tetra-allylsilan langsam zugetropft. Nach Beendigung der Zugabe wurde auf Raumtemperatur erwärmt. Danach wurden flüchtige Bestandteile (im wesentlichen Triethylchlorsilan) im Vakuum bei 0,2 mbar zunächst bei Raumtemperatur, dann bei 40°C Badtemperatur entfernt. Das Produkt wurde als farbloses, leicht bewegliches Öl erhalten.
C₁₂H₂₄B₄Cl₈Si, M = 523,271 g/mol
¹H-NMR (CDCl₃): δ = 0,52 ppm (m, 2H, Si-CH₂), 1,55 ppm (m, 4H, Cl₂B-CH₂-CH₂); ¹³C{¹H}-NMR: δ = 15,4 ppm (Si-CH₂), 20,0 ppm (Si-CH₂-CH₂), 34,2 ppm (B-CH₂); ¹¹B{¹H}-NMR: δ = 63,1 ppm.

### Beispiel 2:

### Herstellung einer Lösung von Si[(CH₂)₃B(C₆F₅)₃]₄⁴⁻ 4 Li⁺

Zu einer Lösung von 2,5 g (10,1 mmol) Brompentafluorbenzol in 60 ml Hexan wurden bei -70°C innerhalb von 20 Minuten 6,35 ml n-Butyllithium (1,6 M in Hexan; 10,1 mmol) getropft. Die erhaltene Suspension wurde 2 Stunden bei -70°C gerührt. Nun wurde tropfenweise innerhalb von 5 Minuten eine Lösung von 445 mg (0,85 mmol) Si[(CH₂)₃BCl₂]₄ aus Beispiel 1 in 5 ml Hexan zugegeben und die Reaktionslösung dann innerhalb von 3 Stunden langsam auf Raumtemperatur erwärmt und über Nacht gerührt.

### Beispiel 3:

### Herstellung von Si[(CH₂)₃B(C₆F₅)₃]₄⁴⁻ 4 C₆H₅-NH(CH₃)₂⁺

Zu einer Lösung von Si[(CH₂)₃B(C₆F₅)₃]₄⁴⁻ 4 Li⁺, hergestellt nach Beispiel 2. wurden 536 mg (3,4 mmol) Dimethylanilinium-Hydrochlorid in 20 ml Methylenchlorid zugegeben, nochmals über Nacht gerührt und schließlich die flüchtigen Bestandteile im Vakuum abkondensiert. Nach Zugabe von 40 ml Methylenchlorid wurde über Kieselgur filtriert und das farblose Filtrat im Vakuum von flüchtigen Bestandteilen befreit. Nach zweimaligem Waschen mit je 20 ml Hexan wurde das Produkt als farbloses Wachs erhalten.
C₁₁₆H₇₂B₄F₆₀N₄Si, M = 2733,170 g/mol
¹¹B{¹H}-NMR (CD₂Cl₂): δ = -13,4 ppm.

### Beispiel 4:

### Polymerisation von Ethylen

In einen 1,4-1-Stahl-Autoklaven wurden 500 ml Toluol, 0,1 ml TIBA und 1 ml einer Lösung von 12,4 mg Bis(cyclopentadienyl)zirconiumdimethyl in 24.7 ml Toluol (= 1 µmol Bis(cyclopentadienyl)zirconiumdimethyl) vorgelegt. Diese Lösung wurde auf 60°C temperiert. Anschließend wurde Ethylen zudosiert, bis der Reaktorinnendruck auf 6 bar anstieg. Durch Zugabe von 1 ml einer Lösung von 57,4 mg der Verbindung aus Beispiel 3 in 42 ml Toluol (=0,5 µmol Si[(CH₂)₃B(C₆F₅)₃]₄⁴⁻ 4 C₆H₅-NH(CH₃)₂⁺) wurde die Polymerisation gestartet. Nach einer Polymerisationsdauer von 20 min bei 60°C und 6 bar wurde der Autoklav entspannt, das Polymere abfiltriert, mit Methanol gewaschen und 20 h im Vakuum bei 60°C getrocknet. Es wurden 36,6 g Polyethylen erhalten.

### Beispiel 5:

### Copolymerisation von Ethylen und 1-Hexen

In einen 250 ml Glasreaktor wurden 100 ml Toluol, 0,1 ml TIBA und 5 ml 1-Hexen vorgelegt. Dann wurde 1 ml einer Lösung von 12,7 mg Ethylenbis(indenyl)zirconiumdimethyl in 16,8 ml Toluol zugegeben (= 1 µmol Ethylenbis(indenyl)zirconiumdimethyl). Anschließend wurde bei 20°C mit einem Gaseinleitungsrohr kontinuierlich bei 1,1 bar Druck Ethylen in die Lösung eingeleitet. Die Polymerisation wurde durch Zugabe von 1 ml einer Lösung von 57,4 mg der Verbindung aus Beispiel 3 in 42 ml Toluol (= 0,5 µmol Si[(CH₂)₃B(C₆F₅)₃]₄⁴⁻ 4 C₆H₅-NH(CH₃)₂⁺) gestartet. Bei einer Temperatur von 20°C und einem Druck von 1,1 bar wurde nach 30 Minuten Polymerisationsdauer eine hochviskose klare Reaktionslösung erhalten, welche durch Zugabe von 100 ml Methanol abgestoppt wurde. Das ausgefallene Polymer wurde abfiltriert, mit Methanol gewaschen und im Vakuumtrockenschrank getrocknet. Es wurden 5,44g Ethylen/1-Hexen-Copolymer mit 14,4 mol-% 1-Hexen (laut ¹³C-NMR-Spektrum) erhalten.

### Beispiel 6:

### Polymerisation von Propylen

Herstellung der Katalysatorlösung: eine Lösung von 5 µmol Dimethylsilylbis(indenyl)zirconiumdichlorid in 5 ml Toluol wurde mit 10 µmol Triethylaluminium versetzt und 20 Minuten bei 20°C gerührt. Anschließend wurden 5 ml einer Lösung von 57,4 mg der Verbindung aus Beispiel 3 in 42 ml Toluol (= 2,5 µmol Si[(CH₂)₃B(C₆F₅)₃]₄⁴⁻4C₆H₅-NH(CH₃)₂⁺) zugegeben und 5 min gerührt.

Polymerisation: In einen 250 ml Glasreaktor wurden 100 ml Hexan, 0,1 ml TIBA und die Katalysatorlösung vorgelegt. Dann wurde bei 40°C mit einem Gaseinleitungsrohr kontinuierlich bei 1,1 bar Druck Propylen in die Lösung eingeleitet. Nach 30 Minuten Polymerisationsdauer wurde die Reaktion durch Zugabe von 100 ml Methanol abgestoppt. Das ausgefallene Polymer wurde abfiltriert, mit Methanol gewaschen und im Vakuumtrockenschrank getrocknet. Es wurden 4,4 g Polypropylenpulver erhalten.

### Beispiel 7:

### Terpolymerisation von Ethylen, Propylen und 5-Ethyliden-2-norbornen

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan, 1 ml Triisobutylaluminium und 0,5 ml einer Lösung von 41,8 mg Ethylenbis(tetrahydroindenyl)zirconiumdichlorid in 9 ml Triisobutylaluminium und 40 ml Hexan (= 1 µmol Ethylenbis(tetrahydroindenyl)-zirkoniumdichlorid) vorgelegt. Dann wurden 51 g Propylen und 5 ml 5-Ethyliden-2-norbornen zudosiert. Die Innentemperatur wurde mit einem Thermostaten auf 40°C eingestellt. Anschließend wurde Ethylen zudosiert, bis der Reaktorinnendruck auf 4 bar anstieg. Durch Zugabe von 2 ml einer Lösung von 57,4 mg der Verbindung aus Beispiel 3 in 42 ml Toluol (= 1 µmol Si[(CH₂)₃B(C₆F₅)₃]₄⁴⁻ 4 C₆H₅-NH(CH₃)₂⁺) wurde die Polymerisation gestartet und kontinuierlich Ethylen zudosiert, so daß der Innendruck bei 40°C konstant 4 bar betrug. Nach 50 Minuten Polymerisationsdauer wurde der Autoklav entspannt und die Polymerlösung mit einer 0,1 Gew-% Hexan-Lösung Vulkanox BKF versetzt, 10 min gerührt und anschließend das Polymer mit Methanol ausgefällt. Das so erhaltene Polymer wurde isoliert und 20 h bei 60°C im Vakuum getrocknet. Es resultierten 80,1 g Terpolymer, welches gemäß der IR-spektroskopische Messung folgen-de Zusammensetzung besitzt: 58,9 % Ethylen, 35,5 % Propylen und 5,6 % ENB. Mit der DSC-Methode wurde ein Tg von -49°C ermittelt.

### Beispiel 8:

### Umsetzung von Si[(CH₂)₃B(C₆F₅)₃]₄⁴⁻ 4 Li⁺ mit Tritylchlorid

Zu einer Lösung von Si[(CH₂)₃B(C₆F₅)₃]₄⁴⁻ 4 Li⁺, hergestellt nach Beispiel 2, wurde innerhalb von 15 min eine Lösung von 948 mg (3,4 mmol) Tritylchlorid in 20 ml Methylenchlorid zugetropft und der Reaktionsansatz 14 h bei 25°C gerührt. Das Lösungsmittel wurde im Vakuum bis zur Trockne abdestilliert und der Rückstand mit 40 ml Methylenchlorid versetzt. Es wurde eine dunkelrot gefärbte Lösung mit einem feinteiligen Feststoff erhalten, der durch Dekantieren und anschließendem Filtrieren abgetrennt wurde. Die klare Lösung wurde erneut im Vakkum bis zur Trockne eingeengt, der rote ölige Rückstand zweimal mit je 40 ml n-Hexan gewaschen, das Hexan dekantiert und der Feststoff erneut im Vakuum bei 25°C getrocknet. Es wurde ein rötlichgefärbtes leicht klebriges Produkt erhalten.
¹¹B{¹H}-NMR (CD₂Cl₂): δ = 1,4 ppm.

### Beispiel 9:

### Polymerisation von Ethylen

In einen 250 ml Glasreaktor wurden 100 ml Toluol, 0,1 ml Triisobutylaluminium und 1 ml einer Lösung von 27,2 mg Bis(indenyl)zirconiumdimethyl in 15,5 ml Toluol vorgelegt (= 5 µmol Bisindenylzirconiumdimethyl). Anschließend wurde mit einem Gaseinleitungsrohr kontinuierlich bei 1,1 bar Druck Ethylen in die Lösung eingeleitet. Die Polymerisation wurde durch Zugabe einer Lösung von 15,9 mg des Produktes aus Beispiel 8 in 1 ml Toluol gestartet. Bei einer Temperatur von 40°C und einem Ethylendruck von 1,1 bar wurde die Reaktion nach 15 min Polymerisationsdauer durch Zugabe von 10 ml Methanol abgestoppt, das Polymer abfiltriert, mit Methanol gewaschen und im Vakuumtrockenschrank getrocknet. Es wurden 1,72 g hochkristallines Polyethylen erhalten, welches gemäß DSC-Messung einen Schmelzpunkt bei +136,5°C und eine Schmelzwärme von 306 J/g (1. Aufheizung) besitzt.

### Beispiel 10:

### Copolymerisation von Ethylen und Propylen

In einen 250 ml Glasreaktor wurden 100 ml Toluol, 0,1 ml TIBA und 1 ml einer Lösung von 20,1 mg Ethylenbis(indenyl)zirconiumdimethyl in 10,6 ml Toluol vorgelegt (= 5 µmol Ethylenbis(indenyl)zirconiumdimethyl). Anschließend wurde bei 20°C mit einem Gaseinleitungsrohr kontinuierlich bei 1,1 bar Druck ein Ethylen/Propylen-Gemisch (Molverhältnis 1:1) in die Lösung eingeleitet. Die Polymerisation wurde durch Zugabe von einer Lösung von 16,9 mg des Produktes aus Beispiel 8 in 1 ml Toluol gestartet. Bei einer Temperatur von 20°C und einem Druck von 1,1 bar wurde nach 1 Stunde Polymerisationsdauer eine hochviskose klare Reaktionslösung erhalten, welche durch Zugabe von 100 ml Methanol abgestoppt wurde. Das ausgefallene elastische Polymer wurde abfiltriert, mit Methanol gewaschen und im Vakuumtrockenschrank getrocknet. Es wurden 22,5 g amorphes Ethylen-Propylen-Copolymer erhalten.

### Beispiel 11:

### Herstellung von Si[(CH₂)₃B(3,5-(CF₃)₂C₆H₃)₃]₄⁴⁻ 4 Li⁺

15,6 ml n-Butyllithium (1,6 M in Hexan, 25 mmol) wurden bei 0°C im Vakuum vom Lösemittel befreit. Nach dem Abkühlen auf -75°C wurden 50 ml auf -50°C vorgekühlter Diethylether zugegeben und solange gerührt, bis das n-Butyllithium wieder vollständig in Lösung war. Nach Zugabe von 4,3 ml (7,3 g; 25 mmol) Brom-3,5-bis(trifluormethyl)benzol wurde die Reaktionsmischung noch 15 Minuten bei -75°C gerührt, dann wurden 1,1 g (2,1 mmol) Si[(CH₂)₃BCl₂]₄ aus Beispiel 1 zugegeben. Nach einer Stunde Rühren wurde auf Raumtempertur erwärmt und über Nacht gerührt. Danach wurde die Reaktionsmischung auf ca. 100 ml Eiswasser gegossen, die wäßrige Phase zweimal mit je 50 ml Ether extrahiert und der Extrakt je einmal mit gesättigter NaCl-Lösung und Wasser gewaschen. Nach dem Trocknen über Natriumsulfat und dem Entfernen des Lösemittels im Vakuum wurde das Produkt als farbloses Öl erhalten.
C₁₀₈H₆₀B₄F₇₂Li₄Si, M = 2824,751 g/mol
¹¹B{¹H}-NMR (CD₂Cl₂): δ = - 9,9 ppm.

### Beispiel 12:

### Herstellung von Si[(CH₂)₃B(3,5-(CF₃)₂C₆H₃)₃]₄⁴⁻ 4 C₆H₅-NH(CH₃)₂⁺

15,6 ml n-Butyllithium (1,6 M in Hexan, 25 mmol) wurden bei 0°C im Vakuum vom Lösemittel befreit. Nach dem Abkühlen auf -75°C wurden 50 ml auf -50°C vorgekühlter Diethylether zugegeben und solange gerührt, bis das n-Butyllithium wieder vollständig in Lösung war. Nach Zugabe von 4,3 ml (7,3 g; 25 mmol) Brom-3,5-bis(trifluormethyl)benzol wurde die Reaktionsmischung noch 15 Minuten bei -75°C gerührt, dann wurden 1,1 g (2,1 mmol) Si[(CH₂)₃BCl₂]₄ aus Beispiel 1 zugegeben. Nach einer Stunde Rühren wurde die Reaktionsmischung auf Raumtemperatur erwärmt und nach Zugabe von 1,3 g (8,33 mmol) Dimethylanilinium-Hydrochlorid über Nacht gerührt. Danach wurden die flüchtigen Bestandteile im Vakuum entfernt und der Rückstand mit 40 ml Methylenchlorid extrahiert. Nach Filtration und Abkondensieren des Lösemittels wurde das Produkt als farbloses Öl erhalten.
¹¹B{¹H}-NMR (CD₂Cl₂): δ = - 9,9 ppm.

### Beispiel 13:

### Herstellung von Si[(CH₂)₃B(3,5-(CF₃)₂C₆H₃)₃]₄⁴⁻4(C₆H₅)₃C⁺

15,6 ml n-Butyllithium (1,6 M in Hexan, 25 mmol) wurden bei 0°C im Vakuum vom Lösemittel befreit. Nach dem Abkühlen auf -75°C wurden 50 ml auf -50°C vorgekühlter Diethylether zugegeben und solange gerührt, bis das n-Butyllithium wieder vollständig in Lösung war. Nach Zugabe von 4,3 ml (7.3 g: 25 mmol) Brom-3.5-bis(trifluormethyl)benzol wurde die Reaktionsmischung noch 15 Minuten bei -75°C gerührt, dann wurden 1,1 g (2,1 mmol) Si[(CH₂)₃BCl₂]₄ aus Beispiel 1 zugegeben.

Nach einer Stunde Rühren bei -75°C wurde die Reaktionsmischung auf Raumtemperatur erwärmt und weitere 60 Stunden gerührt. Nach dem Abkondensieren der flüchtigen Bestandteile im Vakuum wurden 40 ml Hexan und 2,3 g (8,3 mmol) Tritylchlorid zugegeben und die Reaktionsmischung über Nacht unter Rückfluß erwärmt. Nach dem Abkühlen auf Raumtemperatur wurden die flüchtigen Bestandteile im Vakuum entfernt und der Rückstand mit 40ml Methylenchlorid extrahiert. Nach Filtration und Abkondensieren des Lösemittels wurde das Produkt als gelbes Öl erhalten.
¹¹B{¹H}-NMR (CD₂Cl₂): δ = - 10,0 ppm.

### Beispiel 14:

### Herstellung von Si[(CH₂)₂Si(C₃H₅)₃]₄

### (Die Herstellung von Si[(CH₂)₂SiCl₃]₄ erfolgte wie in Organometallics 1994, 13, 2682-2690, beschrieben.)

77,2 g (3,2 mol) Magnesiumspäne wurden in 1900 ml abs. THF suspendiert und auf 0°C gekühlt. Bei 0 bis 5°C wurden nun 131,4 g (1,7 mol) frisch destilliertes Allylchlorid zugetropft (die Reaktion setzt schon nach wenigen ml Zugabe von Allylchlorid ein). Nach Beendigung der Zugabe wurde die Reaktionsmischung auf Raumtemperatur erwärmt und dann 2 Stunden unter Rückfluß erhitzt. Nach dem Abkühlen wurden 143,6 g (0,21 mol) Si[(CH₂)₂SiCl₃]₄ in 100 ml THF zugetropft, wobei die Temperatur bis 35°C anstieg. Nach der Zugabe wurde über Nacht gerührt und anschließend mit 1200 ml Hexan verdünnt. Nach Hydrolyse mit 1200 ml Wasser wurde die abgetrennte organische Phase dreimal mit je 1000 ml Wasser und einmal mit gesättigter Natriumchloridlösung gewaschen. Nach dem Trocknen über MgSO₄ und Abkondensieren der flüchtigen Bestandteile im Vakuum wurde das Produkt als fahlgelbes Öl erhalten.

### Beispiel 15:

### Herstellung von Si[(CH₂)₂Si[(CH₂)₃BCl₂]₃]₄

In einen Kolben mit Gaseinleitung, Rückflußkühler und Innenthermometer wurden bei -65°C 23,5 g (0,2 mol) Bortrichlorid einkondensiert. Bei dieser Temperatur wurde dann eine Mischung aus 23,3 g (0,2 mol) Trethylsilan und 12,4 g (166 mmol) Si[(CH₂)₂Si(C₂H₅)₃]₄ aus Beispiel 14 langsam zugetropft. Nach Beendigung der Zugabe wurde auf Raumtemperatur erwärmt und über Nacht gerührt. Danach wurden flüchtige Bestandteile (im wesentlichen Triethylchlorsilan) im Vakuum bei 0,2 mbar zunächst bei Raumtemperatur, dann bei 40°C Badtemperatur entfernt. Das Produkt wurde als farbloses Öl erhalten, das an der Kolbenwand teilweise kristallisierte. 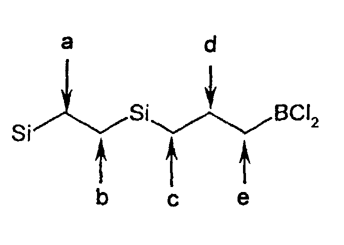 C₄₄H₈₈B₁₂Cl₂₄Si₅, M = 1738,199 g/mol
¹H-NMR (CD₂Cl₂): δ = 0,4 ppm (m, 4H, Si-C^{a}H₂-C^{b}H₂-Si), 0,5 ppm (m, 6H, Si-C^{c}H₂), 1,6 ppm (m, 12 H, C^{d}H₂-C^{e}H₂-BCl₂); ¹³C{¹H}-NMR: δ = 3,3 ppm (Si-C^{a}H₂), 4,77 ppm (Si-C^{b}H₂), 15,1 ppm (Si-C^{c}H₂), 20,1 ppm (C^{d}H₂), 34,4 ppm (breites Signal, B-C^{e}H₂); ¹¹B{¹H}-NMR: δ = 63,1 ppm.

### Beispiel 16:

### Herstellung von Si[(CH₂)₂Si[(CH₂)₃B(C₄H₉)₂]₃]₄

Zu einer Mischung von 4,2 ml n-Butyllithim (1,6 M in Hexan, 6,7 mmol) in 60 ml Hexan wurde bei -70°C eine Lösung von 487 mg (0.28 mmol) Si[(CH₂)₂Si[(CH₂)₃BCl₂]₃]₄ in 5 ml Hexan rasch zugegeben. Nach 30 Minuten Rühren wurde zunächst auf Raumtemperatur erwärmt und schließlich noch 2 Stunden unter Rückfluß erhitzt. Nach dem Abkondensieren der flüchtigen Bestandteile im Vakuum wurden 40 ml Methylenchlorid zugegeben und über Kieselguhr filtriert. Nach dem Abkondensieren der flüchtigen Bestandteile wurde das Produkt als fahlgelbes Öl erhalten.
¹¹B{¹H}-NMR (CD₂Cl₂): δ = + 86,8 ppm.

### Beispiel 17:

### Herstellung von Si[(CH₂)₂Si[(CH₂)₃B(C₆F₅)₃]₃]₄¹²⁻ 12 C₆H₅-NH(CH₃)₂⁺

Zu einer Lösung von 2,5 g (10,1 mmol) Brompentafluorbenzol in 60 ml Hexan wurden bei -70°C innerhalb von 20 Minuten 6,35 ml n-Butylithium (1,6 M in Hexan; 10,1 mmol) getropft. Die erhaltene Suspension wurde 2 Stunden bei -70°C gerührt. Nun wurde tropfenweise innerhalb von 5 Minuten eine Lösung von 487 mg (0,28 mmol) Si[(CH₂)₂Si[(CH₂)₃BCl₂]₃]₄ aus Beispiel 15 in 5 ml Hexan zugegeben und die Reaktionslösung dann innerhalb von 3 Stunden langsam auf Raumtemperatur erwärmt und über Nacht gerührt. Nach Zugabe von 536 mg (3,4 mmol) Dimethylanilinium-Hydrochlorid in 20 ml Methylenchlorid wurde nochmals über Nacht gerührt und schließlich die flüchtigen Bestandteile im Vakuum abkondensiert. Nach Zugabe von 40 Methylenchlorid wurde über Kieselguhr filtriert und das farblose Filtrat im Vakuum von flüchtigen Bestandteilen befreit. Nach zweimaligem Waschen mit je 20 ml Hexan wurde das Produkt als farbloses Wachs erhalten.
C₃₅₆H₂₃₂B₁₂F₁₈₀N₁₂Si₅, M = 8367,896 g/mol.
¹¹B{¹H}-NMR (CD₂Cl₂): δ = - 13,2 ppm.

### Beispiel 18:

### Polymerisation von Ethylen

Die Polymerisation aus Beispiel 9 wurde wiederholt, mit dem Unterschied, daß 1 ml einer Lösung von 132 mg der Verbindung aus Beispiel 17 in 31,6 ml Methylenchlorid (= 0,5 µmol Si[(CH₂)₂Si[(CH₂)₃B(C₆F₅)₃]₃]₄¹²⁻ 12 C₆H₅-NH(CH₃)₂⁺) anstelle einer Lösung der Verbindung aus Beispiel 8 verwendet wurde. Es resultierten 2,1 g Polyethylen.

### Beispiel 19:

### Copolymerisation von Ethylen und Propylen

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 0,1 ml Triisobutylaluminium vorgelegt. Hierzu wurden 0,5 ml einer Lösung von 41,8 mg Ethylenbis(tetrahydroindenyl)zirconiumdichlorid in 9 ml Triisobutylaluminium und 40 ml Hexan zugegeben (= 1 µmol Ethylenbis(tetrahydroindenyl)-zirkoniumdichlorid. Dann wurden 51 g Propylen zudosiert. Die Innentemperatur wurde mit einem Thermostaten auf 40°C eingestellt. Anschließend wurde Ethylen zudosiert, bis der Reaktorinnendruck auf 4 bar anstieg. Durch Zugabe von 0,5 ml einer Lösung von 132 mg der Verbindung aus Beispiel 17 in 31,6 ml Methylenchlorid (= 0,25 µmol Si[(CH₂)₂Si[(CH₂)₃B(C₆F₅)₃]₃]₄]¹²⁻ 12 C₆H₅-NH(CH₃)₂⁺) wurde die Polymerisation gestartet und kontinuierlich Ethylen zudosiert, so daß der Innendruck bei 40°C konstant 4 bar betrug. Nach 40 Minuten Polymerisationsdauer wurde der Autoklav entspannt und anschließend das Polymer mit Methanol ausgefällt. Das so erhaltene Polymer wurde isoliert und 20 h bei 60°C im Vakuum getrocknet. Es resultierten 70,1 g Copolymer, welches gemäß der IR-spektroskopische Messung folgende Zusammensetzung besitzt: 61,8% Ethylen und 38,2% Propylen. Mit der DSC-Methode wurde ein Tg von -57 °C ermittelt.

### Beispiel 20:

### Herstellung von Si[(CH₂)₃B(C₆F₅)₃]₄⁴⁻ 4 H₃C-(CH₂)₁₀-N(CH₃)₂H⁺

a) Zu 10,5 g (42,6 mmol) Brompentafluorbenzol in 250 ml Hexan wurden bei -70°C unter Rühren 26.8 ml (42,6 mmol) einer 1,6 molaren Lösungvon n-Butyllithium in Hexan so zugetropft, daß kein Temperaturanstieg zu beobachten war. Nach weiteren 2 h Rühren bei dieser Temperatur wurden schließlich 1,9 g (3,6 mmol) Si[(CH₂)₃BCl₂]₄ in 15 ml Hexan zugetropft, danach wurde die Reaktionsmischung innerhalb von 3 h auf Raumtemperatur erwärmt und weitere 60 h gerührt. Es wurde eine farblose Suspension erhalten.
b) 20 g (0,1 mol) N,N-Dimethylundecylamin wurden portionsweise unter Rühren zu 14,8 g (0,15 mol) konz. Salzsäure (37 Gew.-%) gegeben. Nach der exothermen Reaktion (bis ca. 35 °C) wurde das zähflüssige Gemisch mit 5 ml konz. Salzsäure und 5 ml Wasser verdünnt, weitere 2 h gerührt und schließlich über Nacht stehengelassen. Die wässrige Phase wurde dann mit 80 ml Methylenchlorid extrahiert, die organische Phase mit Natriumsulfat getrocknet und im Vakuum vom Lösemittel befreit. Zum Entfernen von Wasserspuren wurde der Rückstand in 80 ml Toluol aufgenommen und im Vakuum einkondensiert, dann nochmals in 100 ml Hexan. Nach erneutem Abkondensieren des Lösemittels im Vakuum wurde N,N-Dimethylundecylammoniumhydrochlorid als farbloser Feststoff erhalten.
   Ausbeute: 17,8 g entsprechend 75 % der Theorie.
c) Zu der nach a) erhaltenen Lösung wurden unter Rühren 3,4 g (14,3 mmol) N,N-Dimethylundecylammoniumhydrochlorid in 80 ml Methylenchlorid gegeben und 20 h bei Raumtemperatur gerührt Danach wurden die flüchtigen Bestandteile im Vakuum entfernt und der Rückstand mit 80 ml Methylenchlorid extrahiert. Nach Filtration und Abkondensieren des Lösemittels im Vakuum wurde das Produkt als fahlgelbes Wachs erhalten.
   Ausbeute: 7,0 g entsprechend 64 % der Theorie.
   ¹¹B{¹H}-NMR (CDCl₃): δ = -13,1 ppm.

### Beispiel 21:

### Polymerisation von Ethylen

In einen 250 ml Glasreaktor wurden 100 ml Toluol, 0,1 ml Triisobutylaluminium und 2 ml einer Lösung von 60,0 mg Bis(indenyl)zirconiumdimethyl in 34,2 ml Toluol vorgelegt (= 10 µmol Bisindenylzirconiumdimethyl). Anschließend wurde mit einem Gaseinleitungsrohr kontinuierlich bei 1,1 bar Druck Ethylen in die Lösung eingeleitet. Die Polymerisation wurde durch Zugabe von 0,5 ml einer Lösung von 19,0 mg des Produktes aus Beispiel 20 in 1,25 ml Toluol (= 2,5 µmol Si[(CH₂)₃B(C₆F₅)₃]₄⁴⁻ 4 CH₃(CH₂)₁₀NH(CH₃)₂⁺) gestartet. Bei einer Temperatur von 40°C und einem Ethylendruck von 1,1 bar wurde die Reaktion nach 10 min Polymerisationsdauer durch Zugabe von 10 ml Methanol abgestoppt, das Polymer abfiltriert, mit Methanol gewaschen und im Vakuumtrockenschrank getrocknet. Es wurden 1,9 g Polyethylen erhalten.

### Beispiel 22:

### Herstellung von Si[(CH₂)₃B(C₆F₅)₃]₄⁴⁻ 4 H₃C-(CH₂)₁₁-N(CH₃)₂H⁺

a) Zu 8,0 g (32,2 mmol) Brompentafluorbenzol in 190 ml Hexan wurden bei -70°C unter Rühren 20,3 ml (32,2 mmol) einer 1,6 molaren Lösung von n-Butyllithium in Hexan so zugetropft, daß kein Temperaturanstieg zu beobachten war. Nach weiteren 2 h Rühren bei dieser Temperatur wurden schließlich 1,4 g (2,7 mmol) Si[(CH₂)₃BCl₂]₄ in 15 ml Hexan zugetropft; danach wurde die Reaktionsmischung innerhalb von 3 h auf Raumtemperatur erwärmt und weitere 60 h gerührt. Es wurdeeine farblose Suspension erhalten.
b) 43,3 g (0,2 mol) N,N-Dimethyldodecylamin wurden portionsweise unter Rühren zu 30,0 g (0,3 mol) konz. Salzsäure (37 Gew.-%) gegeben. Nach der exothermen Reaktion (bis ca. 35°C) wurde das zähflüssige Gemisch mit 25 ml konz. Salzsäure und 25 ml Wasser verdünnt und über Nacht gerührt. Die wässrige Phase wurde dann mit 100 ml Methylenchlorid extrahiert, die organische Phase einmal mit 50 ml Wasser gewaschen, mit Natriumsulfat getrocknet und im Vakuum vom Lösemittel befreit. Zum Entfernen von Wasserspuren wurde der Rückstand in 50 ml Toluol aufgenommen und im Vakuum einkondensiert, dann nochmals in 80 ml Hexan. Nach erneutem Abkondensieren des Lösemittels im Vakuum wurde N,N-Dimethyldodecylammoniumhydrochlorid als farbloser Feststoff erhalten.
   Ausbeute: 27,6 g entsprechend 55 % der Theorie.
c) Zu der nach a) erhaltenen Lösung wurden unter Rühren 2,3 g (10,8 mmol) N,N-Dimethyldodecylammoniumhydrochlorid in 60 ml Methylenchlorid gegeben und 20 h bei Raumtemperatur gerührt. Danach wurden die flüchtigen Bestandteile im Vakuum entfernt und der Rückstand mit 80 ml Methylenchlorid extrahiert. Nach Filtration und Abkondensieren des Lösemittels im Vakuum wurde das Produkt als fahlgelbes Wachs erhalten.
   Ausbeute: 7,0 g entsprechend 64 % der Theorie.
   ¹¹B{¹H}-NMR(CDCl₃): δ = -13,1 ppm.

### Beispiel 23:

### Herstellung von Si{(CH₂)₂Si[(CH₂)₃B(C₆F₅)₃]₃}₄¹²⁻ 12 H₃C-(CH₂)₁₀-N(CH₃)₂H⁺

a) Zu 5,0 g (20,2 mmol) Brompentafluorbenzol in 120 ml Hexan wurden bei -70°C unter Rühren 12,7 ml (20,2 mmol) einer 1,6 molaren Lösung von n-Butyllithium in Hexan so zugetropft, daß kein Temperaturanstieg zu beobachten war. Nach weiteren 2 h Rühren bei dieser Temperatur wurden schließlich 974 mg (0,6 mmol) Si{(CH₂)₂Si[(CH₂)₃BCl₂]₃}₄ in 10 ml Toluol zugetropft; danach wurde die Reaktionsmischung innerhalb von 3 h auf Raumtemperatur erwärmt und weitere 60 h gerührt. Es wurde eine farblose Suspension erhalten.
b) Zu der nach a) erhaltenen Lösung wurden unter Rühren 1,6 g (6,7 mmol) N,N-Dimethylundecylammoniumhydrochlorid (hergestellt wie in Beispiel 20 unter b) beschrieben) in 40 ml Methylenchlorid gegeben und 20 h bei Raumtemperatur gerührt. Danach wurden die flüchtigen Bestandteile im Vakuum entfernt und der Rückstand mit 60 ml Methylenchlorid extrahiert. Nach Filtration und Abkondensieren des Lösemittels im Vakuum wurde das Produkt als fahlgelbes Wachs erhalten.
   Ausbeute: 3,1 g entsprechend 60 % der Theorie.
   ¹¹B{¹H}-NMR(CDCl₃): δ=-13,9 ppm.

### Beispiel 24:

### Polymerisation von Ethylen

Die Polymerisation aus Beispiel 21 wurde wiederholt, mit dem Unterschied, daß 0,5 ml einer Lösung von 70 mg der Verbindung aus Beispiel 23 in 2,3 ml Toluol (= 1,7 µmol Si[(CH₂)₂Si[(CH₂)₃B(C₆F₅)₃]₃]₄¹²⁻ 12 CH₃(CH₂)₁₀NH(CH₃)₂⁺) anstelle einer Lösung der Verbindung aus Beispiel 21 verwendet wurde. Es resultierten 1,7 g Polyethylen.

### Beispiel 25:

### Herstellung von Si{(CH₂)₂Si[(CH₂)₂Si(C₃H₅)₃]₃}₄

### (Die Herstellung von Si{(CH₂)₂Si[(CH₂)₂SiCl₃]₃}₄ erfolgte wie in Organometallics, 1994, 13, 2682-2680, beschrieben).

Unter kräftigem Rühren wurden bei anfänglich 0°C 23 ml (21,6 g; 282 mmol) Allylchlorid zu 22,3 g (919 mmol) Magnesiumspänen in 400 ml THF so zugetropft, daß die Reaktionstemperatur niemals über 5°C stieg (die Grignard-Reaktion wurde mit etwas 1,2-Dibromethan gestartet). Nach vollständiger Zugabe wurde zunächst auf Raumtemperatur und schließlich noch 2 Stunden unter Rückfluß erwärmt.

Nach dem Abkühlen auf Raumtemperatur wurden zu der so erhaltenen Reaktionsmischung unter zeitweiser Eiskühlung 15 g (6,8 mmol) Si{(CH₂)₂Si[(CH₂)₂SiCl₃]₃}₄ in 35 ml THF so zugetropft, daß die Reaktionstemperatur bei 20 bis 30°C lag. Danach wurde noch 6 h bei Raumtemperatur gerührt; nach dem Verdünnen mit 250 ml Hexan wurde schließlich mit 250 ml gesättigter Ammoniumchloridlösung hydrolysiert, die organische Phase abgetrennt und diese dreimal mit je 200 ml gesättigter Natriumchloridlösung und einmal mit 200 ml Wasser gewaschen. Nach dem Trocknen über Magnesiumsulfat und dem Abkondensieren der flüchtigen Bestandteile wurde das Produkt als fahlgelbes Öl erhalten.
Ausbeute: 13,2 g entsprechend 81 % der Theorie.

### Beispiel 26:

### Si{(CH₂)₂Si[(CH₂)₂Si[(CH₂)₃BCl₂]₃]₃}₄

Zu 8,5 ml (11,5 g; 97,7 mmol) bei -70°C kondensiertem Bortrichlorid wurde eine Mischung aus 16 ml (11,6 g; 100,2 mmol) Triethylsilan und 6,12 g (2,54 mmol) Si{(CH₂)₂Si[(CH₂)₂Si(C₃H₅)₃]₃} so zugetropft, daß bei der exothermen Reaktion die Temperatur nicht über -60°C stieg (Innenthermometer). Nach dem Zutropfen (ca. 90 min) wurde die Reaktionsmischung noch 30 Minuten bei -70°C gerührt, anschließend auf Raumtemperatur erwärmt und weitere 15 h gerührt. Zum Entfernen geringer Mengen selbstentzündlicher, leichtflüchtiger Bestandteile wurde dann 2 Stunden Argon durch die Lösung geleitet (Durchleiten durch verd. Natronlauge). Schließlich wurden die weiteren noch flüchtigen Bestandteile im Vakuum abkondensiert, wobei die Reaktionsmischung dabei langsam bis auf 40°C erwärmt wurde. Das Produkt wurde als farbloses Wachs erhalten.
Ausbeute: 11,8 g entsprechend 86 % der Theorie.
¹¹B{¹H}-NMR (CDCl₃): δ = 62,2 ppm.

### Beispiel 27:

### Herstellung von Si{(CH₂)₂Si[(CH₂)₂Si[(CH₂)₃B(C₆F₅)₃]₃]₃}₄³⁶⁻ 36 H₃C-(CH₂)₁₀-N(CH₃)₂H⁺

a) Zu 5,0 g (20,2 mmol) Brompentafluorbenzol in 120 ml Hexan wurden bei -70°C unter Rühren 12,7 ml (20,2 mmol) einer 1,6 molaren Lösung von n-Butyllithium in Hexan so zugetropft, daß kein Temperaturanstieg zu beobachten war. Nach weiteren 2 h Rühren bei dieser Temperatur wurden schließlich 1,0 g (0,2 mmol) Si{(CH₂)₂Si[(CH₂)₂Si[(CH₂)₃BCl₂]₃]₃}₄ in 10 ml Toluol zugetropft; danach wurde die Reaktionsmischung innerhalb von 3 h auf Raumtemperatur erwärmt und weitere 60 h gerührt. Es wurde eine farblose Suspension erhalten.
b) Zu der nach a) erhaltenen Lösung wurden unter Rühren 1,6 g (6,7 mmol) N,N-Dimethylundecylammoniumhydrochlorid (hergestellt wie in Beispiel 20 unter b) beschrieben) in 40 ml Methylenchlorid gegeben und 20 h bei Raumtemperatur gerührt. Danach wurden die flüchtigen Bestandteile im Vakuum entfernt und der Rückstand mit 60 ml Methylenchlorid extrahiert. Nach Filtration und Abkondensieren des Lösemittels im Vakuum wurde das Produkt als fahlgelbes Wachs erhalten.
   Ausbeute: 3,7 g entsprechend 70 % der Theorie.
   ¹¹B{¹H}-NMR(CDCl₃): δ = -16,1 ppm.

### Beispiel 28:

### Polymerisation von Ethylen

Die Polymerisation aus Beispiel 21 wurde wiederholt, mit dem Unterschied, daß 0,5 ml einer Lösung von 132,6 mg der Verbindung aus Beispiel 27 om 4,25 ml Toluol (= 0,6 µmol Si{(CH₂)₂Si[(CH₂)₂Si[(CH₂)₃B(C₆F₅]₃]₃}₄³⁶⁻ 36 [CH₃(CH₂)₁₀NH(CH₃)₂]⁺ anstelle einer Lösung der Verbindung aus Beispiel 21 verwendet wurde. Es resultierten 1,6 g Polyethylen.

### Beispiel 29:

### Herstellung von Si[(CH₂)₃B(C₄H₉)₃]₄⁴⁻ 4 Li⁺

14,3 ml (22,9 mmol) einer 1,6 molaren Lösung von n_Butyllithium in Hexan wurden mit 30 ml Hexan verdünnt und auf -70°C gekühlt. Danach wurden unter Rühren 5,5 g (22,9 mmol) MPEDA zugegeben und schließlich 1,0 g (1,9 mmol) Si[CH₂)₃BCl₂]₄ in 5 ml Hexan zugetropft. Nach der exothermen Reaktion (bis ca. -60°C) wurde die Reaktionsmischung noch 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
¹¹B{¹H}-NMR (CDCl₃): δ = -16,8 ppm.

### Beispiel 30:

### Herstellung von Si[(CH₂)₃B(C₄H₉)₃]₄⁴⁻ 4 N(CH₃)₄⁺

a) 14,3 ml (22,9 mmol) einer 1,6 molaren Lösung von n-Butyllithium in Hexan wurden mit 30 ml Hexan verdünnt und auf -70°C gekühlt. Danach wurde unter Rühren 1,0 g (1,9 mmol) Si[(CH₂)₃BCl₂]₄ in 5 ml Hexan zugetropft. Nach der exothermen Reaktion (bis ca. -60°C) wurde die Reaktionsmischung noch 30 min bei -70°C gerührt und schließlich auf Raumtemperatur erwärmt. Nach 60 h Rühren wurde die Reaktionsmischung filtriert und der erhaltene farblose Feststoff im Vakuum getrocknet.
   Ausbeute: 1,8 g.
   ¹¹B{¹H}-NMR (CDCl₃): δ = -16,7 ppm.
b) Zu dem nach a) erhaltenen Feststoff wurden 0,84 g (7,6 mmol) Tetramethylammoniumchlorid und 40 ml Methylenchlorid gegeben und die Reaktionsmischung 60 h bei Raumtemperatur gerührt. Nach Filtration und Abkondensieren der flüchtigen Bestandteile wurde das Produkt aus der Mutterlauge ein farbloser Feststoff erhalten.
   Ausbeute: 1,4 g entsprechend 59 % der Theorie.
   ¹¹B{¹H}-NMR (CDCl₃): δ = -16,7 ppm.

### Beispiel 31:

### Herstellung von Si[(CH₂)₃B(CH₂-Si(CH₃)₃)₃)₄⁴⁻ 4 Li⁺

22,9 ml (22,9 mmol) einer 1,0 molaren Lösung von Trimethylsilylmethyllithium in Hexan wurden mit 60 ml Hexan verdünnt und auf -70°C gekühlt. Danach wurden unter Rühren 5,5 g (22,9 mmol) MPEDA zugegeben und schlißelich 1,0 g (1,9 mmol) Si[(CH₂)₃BCl₂]₄ in 5 ml Hexan zugetropft. Danach wurdedie Reaktionsmischung 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
¹¹B{¹H}-NMR (CDCl₃): δ = -1.8 ppm (breit).

### Beispiel 32:

### Herstellung von Si{(CH₂)₂Si[(CH₂)₃B(n-C₄H₉)₃]₃}₄¹²⁻ 12 Li⁺

12,9 ml (20,7 mmol) einer 1,6 molaren Lösung von n_Butyllithium in Hexan wurden mit 30 ml Hexan verdünnt und auf -70°C gekühlt. Danach wurden unter Rühren 4,9 g (20,7 mmol) MPEDA zugegeben und schließlich 1,0 g (0,57 mmol) Si{(CH₂)₂Si[(CH₂)₃BCl₂]₃}₄ in 5 ml Hexan zugetropft. Danach wurde die Reaktionsmischung 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
¹¹B{¹H}-NMR (CDCl₃): δ = -15,9 ppm.

### Beispiel 33:

### Herstellung von Si{(CH₂)₂Si[(CH₂)₃B(sec.-C₄H₉)₃]₃}₄¹²⁻ 12Li⁺

15,9 ml (20,7 mmol) einer 1,3 molaren Lösung von sec.-Butyllithium im Cyclohexan wurden mit 30 ml Hexan verdünnt und auf -70°C gekühlt. Danach wurden unter Rühren 4,9 g (20,7 mmol) MPEDA zugegeben und schließlich 1,0 g (0,57 mmol) Si{(CH₂)₂Si[(CH₂)₃BCl₂]₃}₄ in 5 ml Hexan zugetropft. Nach der exothermen Reaktion (bis -60°C) wurde die Reaktionsmischung noch 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
¹¹B{¹H}-NMR (CDCl₃): δ = -13,7 und -14,9 ppm.

### Beispiel 34:

### Herstellung von Si{(CH₂)₂Si[(CH₂)₃B(CH₂-C(CH₃)₃)₃]3}₄¹²⁻ 12Li⁺

### (neo-Pentyllithium wurde gemäß J. Am. Chem. Soc. 1959, 81, 1617, aus neo-Pentylchlorid und Lithiumpulver hergestellt; der Gehalt wurde durch Doppeltitration nach J. Am. Chem. Soc. 1944, 66, 1515, bestimmt).

23,0 ml (23,0 mmol) einer 1,0 molaren Lösung von neo-Pentyllithium in Diethylether wurden mit 30 ml Hexan verdünnt und auf -70°C gekühlt. Danach wurde unter Rühren 1,0 g (0,57 mmol) Si{(CH₂)₂Si[(CH₂)₃BCl₂]₃}₄ in 5 ml Hexan zugetropft und die Reaktionsmischung 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
¹¹B{¹H}-NMR (CDCl₃): δ = -14,7 ppm.

### Beispiel 35:

### Herstellung von Si{(CH₂)₂Si[(CH₂)₃B(C₆H₅)₃]₃}₄¹²⁻ 12Li⁺

12,7 ml (23,0 mmol) einer 1,8 molaren Lösung von Phenyllithium in Cyclohexan/Diethylether (70.30) wurden mit 30 ml Hexan verdünnt und auf -70°C gekühlt. Danach wurde unter Rühren 1,0 g (0,57 mmol) Si{(CH₂)₂Si[(CH₂)₃B(Cl₂]₃}₄ in 5 ml Hexan zugetropft und die Reaktionsmischung 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
¹¹B{¹H}-NMR (CDCl₃): δ = -9,8 ppm.

### Beispiel 36:

### Herstellung von Si{(CH₂)₂Si[(CH₂)₃B(C₆H₅)₃]₃}₄¹²⁻ 12N(CH₃)₄⁺

a) 12,7 ml (23,0 mmol) einer 1,8 molaren Lösung von Phenyllithium in Cyclohexan/Diethylether (70.30) wurden mit 30 ml Hexan verdünnt nd auf -70°C gekühlt. Danach wurde unter Rühren 1,0 g (0,57 mmol) Si{(CH₂)₂Si[(CH₂)₃BCl₂]₃}₄ in 5 ml Hexan zugetropft und die Reaktionsmischung 30 min bei -70°C gerührt und dann auf Raumtemperatur erwärmt. Nach 15 h Rühren wurden die flüchtigen Bestandteile im Vakuum abkondensiert; es wurde ein weißer Feststoff erhalten, der in DMSO vollständig löslich war.
   ¹¹B{¹H}-NMR (CDCl₃): δ = -9,9 ppm.
b) Der nach a) erhaltene Feststoff wurde in 50 ml Methylenchlorid suspendiert und auf -70°C abgekühlt. Danach wurden unter Rühren 0,66 g (6,9 mmol) Trimethylammoniumchlorid zugegeben, die Reaktionsmischung auf Raumtemperatur erwärmt und weitere 15 h gerührt Nach Filtration über Kieselguhr wurde die erhaltene klare Mutterlauge im Vakuum von flüchtigen Bestandteilen befreit; das Produkt wurde als fahlgelbes Wachs erhalten.
   ¹¹B{¹H}-NMR (CDCl₃): δ = -9,8 ppm.

### Beispiel 37:

### Herstellung von Si{(CH₂)₂Si[(CH₂)₃B(C₆H₅)₃]₃}₄¹²⁻ 12 C₆H₅-N(CH₃)₂H⁺

a) 12,7 ml (23,0 mmol) einer 1,8 molaren Lösung von Phenyllithium in Cyclohexan/Diethylether (70.30) wurden mit 30 ml Hexan verdünnt und auf -70°C gekühlt. Danach wurde unter Rühren 1,0 g (0.57 mmol) Si{(CH₂)₂Si[(CH₂)₃BCl₂]₃}₄ in 5 ml Hexan zugetropftund die Reaktionsmischung 30 min bei -70°C gerührt und dann auf Raumtemperatur erwärmt. Nach 15 h Rühren wurden die flüchtigen Bestandteile im Vakuum abkondensiert.
b) Der nach a) erhaltene Feststoff wurde in 100 ml Methylenchlorid suspendiert und auf -70°C abgekühlt. Danach wurden unter Rühren 1,1 g (6,0 mmol) Dimethylaniliniumhydrochlorid zugegeben. 30 min bei -70°C gerührt. Danach wurde die Reaktionsmischung auf Raumtemperatur erwärmt und weitere 15 h gerührt. Nach Filtration über Kieselguhr wurde die erhaltene klare Mutterlauge im Vakuum von flüchtigen Bestandteilen befreit; das Produkt wurde als fahlgelbes Wachs erhalten.
   ¹¹B{¹H}-NMR (CDCl₃): δ = -9,8 ppm.

### Beispiel 38:

### Herstellung von Si[(CH₂)₃BF₂]₄

Bei 0°C wurden unter Rühren zu 5 g (9,6 mmol) Si[(CH₂)₃BCl₂]₄ in 70 ml Hexan 6,53 g (28,7 mmol) Antimontrifluorid zugegeben. Nach einer Stunde bei 0°C wurde die weiße Suspension auf Raumtemperatur erwärmt und über Nacht gerührt. Danach wurde der Niederschlag abfiltriert und die flüchtigen Bestandteile im Vakuum abkondensiert. Während des Abkondensierens fiel erneut eine geringe Menge eines farblosen Niederschlags aus; um diesen Abzutrennen wurde zu dem erhaltenen Rückstand 30 ml Hexan gegeben und die Mischung über Nacht bei 4°C aufbewahrt. Danach wurde erneut filtriert und nach dem Abkondensieren des Lösemittels im Vakuum wurde das Produkt als farbloses Öl erhalten.
C₁₂H₂₄B₄F₈Si, M = 391,647 g/mol
¹H-NMR (CD₂Cl₂): δ = 0,63 pp, (m, 2H, Si- CH₂), 1,12 ppm (m, 2H, CH₂-CH₂-CH₂), 1,50 ppm (m, 2H, B-CH₂); ¹³C{¹H}-NMR: δ = 16,8 ppm (Si- CH₂), 18,1 ppm (Signale von Si-CH₂-CH₂ und B-CH₂ überlagert); ¹⁹F{¹H}-NMR: δ = -77,0 ppm, ¹¹B {¹H}-NMR: δ = 28,9 ppm.

## Patentansprüche

1. Dendrimere Verbindungen der allgemeinen Formel
R¹ ₄₋ᵢMe¹[(R⁴)ₙX]ᵢ (I),
worin
X für Me²R²R³(R^{y})ᵣ steht,
R¹, R², R³, R^{y} gleich oder verschieden sind, gegebenenfalls ein- oder mehrfach substituiert sein können, und für Wasserstoff, C₅-C₂₀-Cycloalkyl, C₁-C₂₀-Alkyl, C₇-C₄₀-Aralkyl, C₆-C₄₀-Aryl, C₁-C₁₀-Alkoxy, C₆-C₄₀-Aryloxy, Silyloxy oder Halogen stehen,
R⁴ einen gegebenenfalls ein- oder mehrfach substituierten Alkylen-, Alkenylenoder Alkinylenrest, der gegebenenfalls durch ein oder mehrere Heteroatome unterbrochen ist, darstellt,
Me¹ für ein Element der Gruppe IVa des Periodensystems der Elemente (nach IUPAC) steht,
Me² ein Element der Gruppe IIIa des Periodensystems der Elemente (nach IUPAC) darstellt,
i eine ganze Zahl von 2 bis 4 bedeutet,
n für eine ganze Zahl von 1 bis 20 steht und
r 0 oder 1 sein kann,
wobei für r = 1 der Rest Me² eine negative Formalladung trägt und im Fall einer negativen Formalladung von Me² diese durch ein Kation kompensiert wird,
oder worin
X für Me¹R⁵ₐ[(R⁴)ₘMe²R²R³ (R^{y})ᵣ]₃₋ₐ steht,
Me¹, Me², R¹, R², R³, R⁴, R^{y}, i, n, r die zurvor erwähnten Bedeutungen besitzen
R⁵ die Bedeutung der Reste R¹, R², R³, R^{y} hat,
m gleich oder verschieden von n ist und für ganze Zahlen von 1 bis 20 steht und
a 0, 1 oder 2 bedeutet,
oder worin
X für Me¹R⁵ₐ[(R⁴)ₘMe¹R⁶_{b}[(R⁴)ₚMe²R²R³(R^{y})ᵣ]_{3-b}]₃₋ₐ steht,
Me¹, Me², R¹, R², R³, R⁴, R⁵, R^{y}, i, n, r, m, a die zuvor erwähnten Bedeutungen besitzen,
R⁶ die Bedeutung der Reste R¹, R², R³, R^{y}, R⁵ hat,
b für 0, 1 oder 2 steht und
p ganze Zahlen von 1 bis 20 darstellt,
wobei
a) dendrimere Verbindungen mit flüssigkristallinen Eigenschaften, **dadurch gekennzeichnet, dass** das Grundgerüst aus einem flexiblen Carbosilangerüst besteht
und
b) dendrimeren Verbindungen der allgemeinen Struktur II 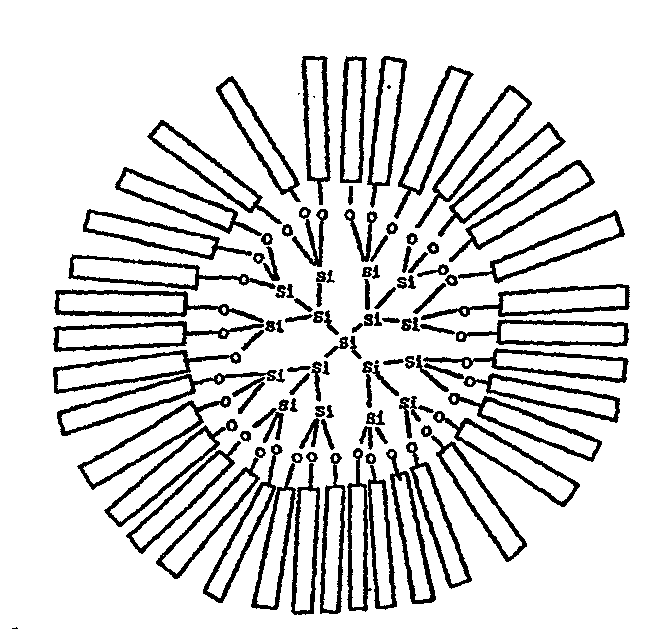
worin ein Rechtech eine stäbchenförmige, mesogene Gruppe symbolistert, ausgenommen sind.

2. Verfahren zur Herstellung der neuen dendrimeren Verbindungen des Anspruchs 1, **dadurch gekennzeichnet, daß** man Verbindungen der allgemeinen Formel (IV)
R¹ ₄₋ᵢMe¹[(R⁷)ₙ₋₂Y]ᵢ (IV),
worin
Y für CR⁸ = CR⁹R¹⁰ steht,
R⁸, R⁹ und R¹⁰ gleich oder verschieden sind und für Wasserstoff, Alkyl, Aryl oder Halogen stehen,
R⁷ die Bedeutung des Restes R⁴ in der Formel (1) hat,
n für eine ganze Zahl von 2 bis 20 steht und
R¹, Me¹ und i die für die Formel (I) gegebene Definition besitzen,
oder worin
Y für Me¹R⁵ₐ[(R⁷)ₘ₋₂(CR⁸=CR⁹R¹⁰)]₃₋ₐ steht,
R⁵ die in Formel (I) gegebene Definition besitzt,
oder worin
Y für Me¹R⁵ₐ[(R⁴)ₘMe¹R⁶_{b}[(R⁷)ₚ₋₂(CR⁸=CR⁹R¹⁰)]_{3-b}]₃₋ₐ steht,
R⁶ die in Formel (I) gegebene Definition besitzt,
m, p für ganze Zahlen von 2 bis 20 stehen und worin alle genannten Reste in den Formeln für Y die vorgenannten Bedeutungen besitzen,
mit Verbindungen der allgemeinen Formel (V)
R¹¹-Me²R²R³ (V),
worin
R¹¹ für Wasserstoff oder C₁-C₃₀-Alkyl steht und
Me²,R² und R³ die in der Formel (I) genannten Bedeutungen besitzen.
zur Reaktion bringt und im Falle von r = 1 das daraus erhaltene Produkt weiter mit Verbindungen der allgemeinen Formel (VI)
Me³-R^{y} (VI),
worin
Me³ ein Alkalimetall ist und R^{y} die zuvor genannte Bedeutung besitzt,
oder mit Verbindungen der allgemeinen Formel (VII)
Hal_{q}-Me⁴-R^{y} _{2-q} (VII),
worin
Me⁴ ein Erdalkali- oder Übergangsmetall der 1. oder 2. Nebengruppe ist,
Hal für Halogen steht,
q 0 oder 1 ist und
R^{y} die Bedeutung wie zuvor hat,
umsetzt.

3. Verwendung der dendrimeren Verbindungen der Formel (I) einschließlich der in Formel (I) ausgeschlossenen dendrimeren Verbindungen als Katalysatoren.

4. Verwendung der dendrimeren Verbindungen nach Anspruch 3 zur Herstellung von Katalysatorsystemen auf Basis von Übergangsmetallkomplexen.

5. Verwendung der dendrimeren Verbindungen nach Anspruch 3 zur Polymerisation von ungesättigten organischen Verbindungen.

6. Verwendung der dendrimeren Verbindungen nach Anspruch 3 zur Herstellung von Elastomeren.

7. Verwendung der dendrimeren Verbindungen nach Anspruch 3 zur Herstellung von Elastomeren auf Basis von Copolymeren des Ethylens und α-Olefinen.

8. Verwendung der dendrimeren Verbindungen nach Anspruch 3 zur Herstellung von Elastomeren auf Basis von Copolymeren des Ethylens, Propylens, von konjugierten und nicht konjugierten Dienen.

9. Verwendung der dendrimeren Verbindungen nach Anspruch 8 **gekennzeichnet dadurch, dass** konjugierte und nicht konjugierte Diene ausgewählt aus der Gruppe:
1,3-Butadien, Isopren, 1,3 Pentadien, 1,4 Hexadien, 1,5-Heptadien, 5,7-Dimethyl-1,6-Octadien, 4-Vinyl-1-cyclohexen, 5-Ethyliden-2-norbornen, 5-Vinyl-2-norbomen und Dicyclopentadien
sind.

## Claims

1. Dendrimeric compounds of the general formula
R¹ ₄₋ᵢMe¹[(R⁴)ₙX]ᵢ (I),
in which
X denotes Me²R²R³(R^{y})ᵣ,
R¹, R², R³, R^{y} are identical or different, may optionally be mono- or polysubstituted and denote hydrogen, C₅-C₂₀ cycloalkyl, C₁-C₂₀ alkyl, C₇-C₄₀ aralkyl, C₆-C₄₀ aryl, C₁-C₁₀ alkoxy, C₆-C₄₀ aryloxy, silyloxy or halogen,
R⁴ represents an optionally mono- or polysubstituted alkylene, alkenylene or alkynylene residue, which is optionally interrupted by one or more heteroatoms,
Me¹ denotes an element of group IVa of the periodic system of the elements (IUPAC nomenclature),
Me² represents an element of group IIIa of the periodic system of the elements (IUPAC nomenclature),
i means an integer from 2 to 4,
n denotes an integer from 1 to 20 and
r may be 0 or 1,
wherein, when r = 1, the Me² residue bears a negative formal charge and in the event of a negative formal charge on Me², this is offset by a cation,
or in which
X denotes Me¹R⁵ₐ [(R⁴)ₘMe²R²R³(R^{y})ᵣ]₃₋ₐ,
Me¹, Me², R¹, R², R³, R⁴, R^{y}, i, n, r have the above-stated meanings,
R⁵ has the meaning of the residues R¹, R², R³, R^{y},
m is identical to or different from n and denotes integers from 1 to 20 and
a means 0, 1 or 2,
or in which
X denotes Me¹R⁵ₐ[(R⁴)ₘMe¹R⁶_{b}[(R⁴)ₚMe²R²R³(R^{y})ᵣ]_{3-b}]₃₋ₐ,
Me¹, Me², R¹, R², R³, R⁴, R⁵, R^{y}, i, n, r, m, a have the above-stated meanings,
R⁶ has the meaning of the residues R¹, R², R³, R^{y}, R⁵,
b denotes 0, 1 or 2 and
p represents integers from 1 to 20,
wherein
a) dendrimeric compounds with liquid crystalline properties which are **characterised in that** the basic structure consists of a flexible carbosilane skeleton and
b) dendrimeric compounds of the general structure II 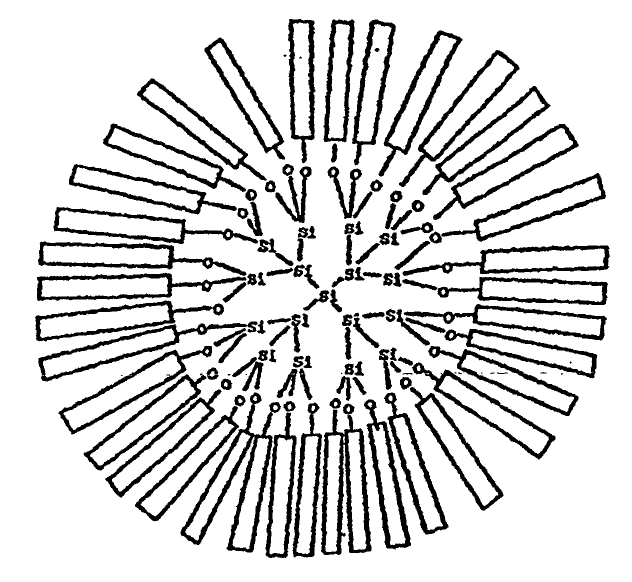 in which a rectangle represents a rodlike, mesogenic group,
are excluded.

2. A method for the production of the novel dendrimeric compounds of claim 1, **characterised in that** compounds of the general formula (IV)
R¹ ₄₋ᵢMe¹[(R⁷)ₙ₋₂Y]ᵢ (IV)
in which
Y denotes CR⁸=CR⁹R¹⁰,
R⁸, R⁹ and R¹⁰ are identical or different and denote hydrogen, alkyl, aryl or halogen,
R⁷ has the meaning of residue R⁴ in the formula (I),
n denotes an integer from 2 to 20 and
R¹, Me¹ and i have the definition stated for the formula (I),
or in which
Y denotes Me¹R⁵ₐ [(R⁷)ₘ₋₂(CR⁸=CR⁹R¹⁰)]₃₋ₐ,
R⁵ has the definition stated in the formula (I),
or in which
Y denotes Me¹R⁵ₐ[(R⁴)ₘMe¹R⁶_{b}[(R⁷)ₚ₋₂(CR⁸-CR⁹R¹⁰)]_{3-b}]₃₋ₐ,
R⁶ has the definition stated in formula (I),
m, p denote integers from 2 to 20 and in which all the residues stated in the formulae have the above-stated meanings for Y,
are reacted with compounds of the general formula (V)
R¹¹Me²R²R³ (V),
in which
R¹¹ denotes hydrogen or C₁-C₃₀ alkyl and
Me², R² and R³ have the meanings stated in the formula (I),
and, in the event that r = 1, the resultant product is further reacted with compounds of the general formula (VI)
Me³-R^{y} (VI),
in which
Me³ is an alkali metal and R^{y} has the above-stated meaning,
or with compounds of the general formula (VII)
Hal_{q}-Me⁴-R^{y} _{2-q} (VII),
in which
Me⁴ is an alkaline earth metal or transition metal of subgroups 1 or 2,
Hal denotes halogen,
q is 0 or 1 and
R^{y} has the meaning as before.

3. Use of the dendrimeric compounds of the formula (I), including the dendrimeric compounds excluded from the formula (I), as catalysts.

4. Use of the dendrimeric compounds according to claim 3 for the production of catalyst systems based on transition metal complexes.

5. Use of the dendrimeric compounds according to claim 3 for the polymerisation of unsaturated organic compounds.

6. Use of the dendrimeric compounds according to claim 3 for the production of elastomers.

7. Use of the dendrimeric compounds according to claim 3 for the production of elastomers based on copolymers of ethylene and α-olefins.

8. Use of the dendrimeric compounds according to claim 3 for the production of elastomers based on copolymers of ethylene, propylene, on conjugated and unconjugated dienes.

9. Use of the dendrimeric compounds according to claim 8, **characterised in that** conjugated and unconjugated dienes are selected from the group: 1,3-butadiene, isoprene, 1,3-pentadiene, 1,4-hexadiene, 1,5-heptadiene, 5,7-dimethyl-1,6-octadiene, 4-vinyl-1-cyclohexene, 5-ethylidene-2-norbornene, 5-vinyl-2-norbornene and dicyclopentadiene.

## Revendications

1. Composés dendrimères de formule
R¹ ₄₋ᵢMe¹[(R⁴)ₙX]ᵢ (I),
dans laquelle
X signifie Me²R²R³(R^{y})ᵣ,
R¹, R², R³, R^{y} sont identiques ou différents, peuvent éventuellement être substitués une ou plusieurs fois, et signifient l'hydrogène, un radical cycloalkyle en C₅-C₂₀, alkyle en C₁-C₂₀, aralkyle en C₇-C₄₀, aryle en C₆-C₄₀, alcoxy en C₁-C₁₀, aryloxy en C₆-C₄₀, silyloxy ou un halogène,
R⁴ est un radical alkylène, alcénylène ou alcinylène éventuellement substitué une ou plusieurs fois, qui éventuellement est interrompu par un ou plusieurs hétéroatomes,
Me¹ est un élément du groupe IVa du système périodique des éléments (selon IUPAC),
Me² est un élément du groupe IIIa du système périodique des éléments (selon IUPAC),
i est un nombre entier de 2 à 4,
n est un nombre entier de 1 à 20 et
r peut être égal à 0 ou 1,
où pour r = 1 le radical Me² porte une charge formelle négative et dans le cas d'une charge formelle négative de Me² celle-ci est compensée par un cation,
ou dans laquelle
X signifie Me¹R⁵ₐ[(R⁴)ₘMe²R²R³(R^{y})ᵣ]₃₋ₐ,
Me¹, Me², R¹, R², R³, R⁴, R^{y}, i, n, r ont les significations mentionnées ci-dessus,
R⁵ a la signification du radical R¹,R²,R³,R^{y},
m est identique ou différent de n et est un nombre entier de 1 à 20 et
a vaut 0, 1 ou 2,
ou dans laquelle
X signifie Me¹R⁵ₐ[(R⁴)ₘMe¹R⁶_{b}[(R⁴)ₚMe²R²R³(R^{y})ᵣ]_{3-b}]_{3-a,}
Me¹, Me², R², R³, R⁴, R⁵, R^{y}, i, n, r, m, a, ont les significations mentionnées ci-dessus,
R⁶ est a la signification des radicaux R¹, R², R³, R^{y}, R⁵,
b vaut 0, 1 ou 2 et
p est un nombre entier de 1 à 20,
où sont exclus
c) les composés dendrimères avec des propriétés de cristaux liquides, sont **caractérisés en ce que** le squelette de base est constitué d'un squelette carbosilane flexible, et
d) les composés dendrimères de structure générale II 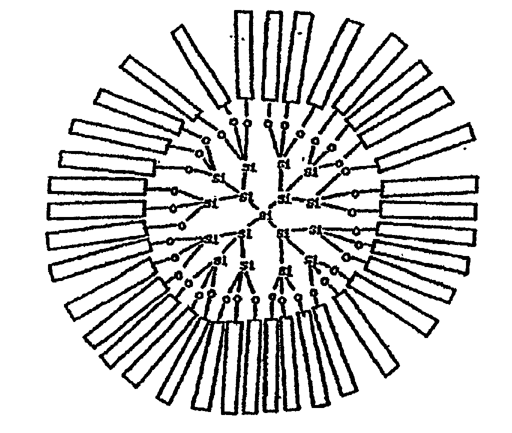
dans laquelle un rectangle symbolise un groupe mésogène, en forme de bâtonnet.

2. Procédé de préparation des nouveaux composés dendrimères selon la revendication 1, **caractérisé en ce qu'**on fait réagir des composés de formule générale (IV)
R¹ ₄₋ᵢMe¹[(R⁷)ₙ₋₂Y]ᵢ (IV),
dans laquelle
Y est CR⁸ = CR⁹R¹⁰,
R⁸, R⁹ et R¹⁰ sont identiques ou différents et sont l'hydrogène, un radical alkyle, aryle ou halogèno,
R⁷ a la signification des radicaux R⁴ dans la formule (I),
n est un nombre entier de 2 à 20,
R¹, Me¹ et i ont la définition donnée pour la formule (I),
ou dans laquelle
Y est Me¹R⁵ₐ[(R⁷)ₘ₋₂(CR⁸=CR⁹R¹⁰)]₃₋ₐ,
R⁵ a la définition donnée pour la formule (I),
ou dans laquelle
Y est Me¹R⁵ₐ[(R⁴)ₘMe¹R⁶_{b}[(R⁷)ₚ₋₂(CR⁸=CR⁹R¹⁰)]_{3-b}]₃₋ₐ,
R⁶ a la définition donnée dans la formule (I),
m, p sont un nombre entier de 2 à 20 et dans laquelle tous les autres radicaux cités dans les formules pour Y ont les significations citées précédemment,
avec des composés de formule générale (V)
R¹¹Me²R²R³ (V),
dans laquelle
R¹¹ est l'hydrogène ou un radical alkyle en C₁-C₃₀ et
Me², R² et R³ ont les significations citées dans la formule (I), et dans le cas où r = 1, on fait réagir en outre le produit ainsi obtenu avec des composés de formule générale (VI)
Me³-R^{y} (VI),
dans laquelle
Me³ est un métal alcalin et R^{y} a la signification citée précédemment, ou avec des composés de formule générale (VII)
Hal_{q}-Me⁴-R^{y} _{2-q} (VII),
dans laquelle
Me⁴ est un métal alcalino-terreux ou de transition des groupes secondaires 1 ou 2,
Hal est un halogène,
q vaut 0 ou 1 et
R^{y} a la signification précédente.

3. Utilisation des composés dendrimères de formule (I) y compris les composés dendrimères exclus dans la formule (I) comme catalyseurs.

4. Utilisation des composés dendrimères selon la revendication 3 pour la préparation de systèmes catalytiques à base de complexes de métaux de transition.

5. Utilisation des composés dendrimères selon la revendication 3 pour la polymérisation de composés organiques insaturés.

6. Utilisation des composés dendrimères selon la revendication 3 pour la préparation d'élastomères.

7. Utilisation des composés dendrimères selon la revendication 3 pour la préparation d'élastomères à base de copolymères d'éthylène et d'α-oléfines.

8. Utilisation des composés dendrimères selon la revendication 3 pour la préparation d'élastomères à base de copolymères d'éthylène, de propylène, de diènes conjugués et non conjugués.

9. Utilisation des composés dendrimères selon la revendication 8, **caractérisée en ce que** les diènes conjugués et non conjugués sont choisis dans le groupe : le 1,3-butadiène, l'isoprène, le 1,3-pentadiène, le 1,4-hexadiène, le 1,5-heptadiène, le 5,7-diméthyl-1,6-octadiène, le 4-vinyl-1-cyclohexène, le 5-éthylidèn-2-norbornène, le 5-vinyl-2-norbomène et le dicyclopentadiène.
